# EUROPEAN PATENT SPECIFICATION

(11) **EP 3 580 831 B1**
(45) Date of publication and mention of the grant of the patent: **23.08.2023**
(21) Application number: 18785163.9
(22) Date of filing: 06.04.2018
(51) Int. Cl.: H02J 50/40, H04N 21/443, H02J 7/02, H02J 50/20, G05F 1/66, H02J 50/12, H02J 50/60, H02J 50/10, H02J 50/90, H02J 50/80, H01F 38/14, H04N 5/63

(54) **WIRELESS POWER TRANSMITTER, AND WIRELESS POWER RECEIVING ELECTRONIC DEVICE**
DRAHTLOSER STROMSENDER, UND ELEKTRISCHE VORRICHTUNG ZUM DRAHTLOSEN STROMEMPFANG
ÉMETTEUR D'ÉNERGIE SANS FIL, ET DISPOSITIF ÉLECTRONIQUE DE RÉCEPTION D'ÉNERGIE SANS FIL

(30) Priority: 12.04.2017 US 201762484473 P; 27.06.2017 KR 20170081243
(43) Date of publication of application: 18.12.2019
(73) Proprietor: Samsung Electronics Co., Ltd., Suwon-si, Gyeonggi-do 16677 (KR)
(72) Inventor: BYUN, Kang-Ho, Gyeonggi-do, 16677 (KR); JUNG, Ji-Hoon, Gyeonggi-do, 16677 (KR); KIM, Myung-Ho, Gyeonggi-do, 16677 (KR); KIM, Chang-Hyun, Gyeonggi-do, 16677 (KR)
(74) Representative: Appleyard Lees IP LLP
(86) International application number: PCT/KR2018/004089
(87) International publication number: WO 2018/190578

(56) References cited:
- CN-A- 102 104 285
- CN-A- 103 563 212
- CN-A- 105 933 629
- CN-A- 105 958 602
- CN-A- 105 958 602
- CN-A- 106 100 144
- KR-A- 20130 028 011
- US-A1- 2004 046 677
- US-A1- 2011 248 575
- US-A1- 2011 248 575
- US-A1- 2016 099 610

## Description

### [Technical Field]

The disclosure relates generally to electronic devices, and more particularly, to wireless power transmitters for wirelessly transmitting power, and electronic devices for wirelessly receiving power.

### [Background Art]

Portable digital communication devices have become necessities in modern times, as customers desire to receive various high-quality services at any time and place. The Internet of things (IoT) technology bundles various sensors, home appliances, and communication devices into a single network. A diversity of sensors requires a wireless power transmission system for seamless operations.

Wireless power transmission may be performed in a magnetic induction, magnetic resonance, or electromagnetic wave scheme. The magnetic induction or magnetic resonance scheme is advantageous in charging electronic devices positioned within a relatively short distance from the wireless power transmitter. The electromagnetic wave scheme is more advantageous for remote power transmission that reaches a longer distance than in the magnetic induction or magnetic resonance scheme, is primarily intended for remote power transmission, reaches the location of remote power receivers, and delivers power in a most efficient manner. Patent publication CN 103 563 212 A describes a wireless power supply system. This prior art is reflected by the preamble of claim 1. Patent publication CN 105 933 629 A describes a wireless power supply method.

### [Disclosure of Invention]

### [Technical Problem]

An electronic device for wirelessly receiving power may perform various operations. When wirelessly receiving power, an electronic device, such as a television (TV), may have varying power consumption as certain steps are performed. For example, when the brightness of the TV increases, the display may consume more power. In this case, the electronic device may turn off if the power wirelessly received by the electronic device is less than the power consumption. That is, the electronic device may turn off unless the power received by the electronic device increases responsive to variations in step.

As such, there is a need in the art for a method and apparatus that compensates for such power consumption, for the user's convenience.

### [Solution to Problem]

An aspect of the present disclosure is to address at least the-mentioned problems and/or disadvantages and to provide at least the advantages described below. Accordingly, an aspect of the present disclosure is to provide a wireless power transmitter that maintains the power that an electronic device receives greater than the power that the electronic device consumes by increasing the power that the electronic device transmits prior to performing a particular operation.

The electronic device may enable the power that it receives to remain greater than the power that it consumes by sending a request for increasing power to the wireless power transmitter corresponding to a particular operation before the electronic device performs the particular operation.

According to an embodiment, provided is a wireless power transmitter configured to wirelessly transmit power, the wireless power transmitter as set out in the accompanying claims.

According to an embodiment, provided is an electronic device configured to wirelessly receive power, as described in the accompanying claims.

We also describe an electronic device configured to wirelessly receive power from a wireless power transmitter includes a power receiving circuit configured to receive a first magnitude of power in a first state of the electronic device, a communication circuit, and a control circuit configured to obtain a state change command enabling a state of the electronic device to change from the first state to a second state, identify a power consumption corresponding to the second state, transmit a first communication signal containing information about the power consumption corresponding to the second state through the communication circuit to the wireless power transmitter, and change the state of the electronic device to the second state after a magnitude of the power received through the power receiving circuit increases from the first magnitude to a second magnitude.

### [Brief Description of Drawings]

The above and other aspects, features, and advantages of certain embodiments of the present disclosure will become apparent from the following description taken in conjunction with the accompanying drawings, in which:
FIG. 1A illustrates a wireless power transmitter and an electronic device according to an embodiment;
FIG. 1B illustrates a set-top box and a TV according to an embodiment;
FIG. 2 illustrates operations of a wireless power transmitter and an electronic device according to an embodiment;
FIG. 3A illustrates a wireless power transmitter, an electronic device, and a control device according to an embodiment;
FIG. 3B illustrates a wireless power transmitter and an electronic device according to an embodiment;
FIG. 3C illustrates a power transmitting circuit and a power receiving circuit as per an induction scheme or resonance scheme according to an embodiment;
FIG. 3D illustrates a power transmitting circuit and a power receiving circuit as per an electromagnetic wave scheme according to an embodiment;
FIG. 4 illustrates operations of a wireless power transmitter, an electronic device, and a control device according to an embodiment;
FIG. 5A illustrates operations of a set-top box, a TV, and a control device according to an embodiment;
FIG. 5B illustrates a wireless power transmitter and an electronic device according to an embodiment;
FIG. 6 illustrates operations of an electronic device according to an embodiment;
FIG. 7 illustrates operations of a wireless power transmitter, an electronic device, and a control device according to an embodiment;
FIG. 8A illustrates operations of a set-top box, a TV, and a control device according to an embodiment;
FIG. 8B illustrates a wireless power transmitter and an electronic device according to an embodiment;
FIGs. 9A and 9B illustrate a method for operating a wireless power transmitter according to an embodiment;
FIGs. 10A and 10B illustrate a state of an electronic device according to an embodiment;
FIG. 11A illustrates a method for operating a wireless power transmitter according to an embodiment;
FIG. 11B is a graph illustrating power received and power consumed by an electronic device according to an embodiment;
FIGs. 12A and 12B illustrate a relationship between a wireless power transmitter and a set-top box according to an embodiment;
FIG. 13 illustrates a method for operating a wireless power transmitter according to an embodiment;
FIG. 14 illustrates operations of a wireless power transmitter and an electronic device according to an embodiment;
FIG. 15 illustrates a method for operating a wireless power transmitter according to an embodiment;
FIG. 16 illustrates a process for controlling an electronic device using a remote electronic device according to an embodiment;
FIG. 17 illustrates a method for controlling a wireless power transmitter according to an embodiment;
FIG. 18 illustrates a wireless power transmitter according to an embodiment;
FIG. 19 illustrates a method for operating a wireless power transmitter according to an embodiment;
FIG. 20 illustrates a method for operating a wireless power transmitter according to an embodiment;
FIG. 21 illustrates a method for operating a wireless power transmitter and an electronic device according to an embodiment;
FIG. 22 illustrates a method for operating a wireless power transmitter and an electronic device according to an embodiment;
FIG. 23 illustrates a method for operating a wireless power transmitter and an electronic device according to an embodiment;
FIG. 24 illustrates a method for operating a wireless power transmitter, an electronic device, and a control device according to an example;
FIG. 25 illustrates a method for operating an electronic device according to an example;
FIG. 26 illustrates a method for operating an electronic device according to an example;
FIG. 27A illustrates a method for operating a wireless power transmitter according to an example;
FIG. 27B illustrates a method for operating an electronic device to wirelessly receive power according to an example;
FIG. 28 illustrates a relationship between media data and power consumption according to an example;
FIG. 29 illustrates a method for operating a wireless power transmitter and an electronic device according to an example;
FIGs. 30A and 30B illustrate a method for operating an electronic device according to example;
FIG. 31 illustrates a method for operating an electronic device according to an example; and
FIG. 32 illustrates a method for operating an electronic device according to an example.

Throughout the drawings, like reference numerals will be understood to refer to like parts, components, and structures.

### [Mode for the Invention]

Hereinafter, embodiments of the present disclosure are described with reference to the accompanying drawings. However, it should be appreciated that the present disclosure is not limited to the embodiments and the terminology used herein. The same or similar reference numerals may be used to refer to the same or similar elements throughout the specification and the drawings. Descriptions of well-known functions and/or configurations will be omitted for the sake of clarity and conciseness.

It is to be understood that the singular forms "a," "an," and "the" include plural references unless the context clearly dictates otherwise. As used herein, the expressions "A or B" or "at least one of A and/or B" may include all possible combinations of A and B. As used herein, the terms "first" and "second" may modify various components regardless of importance and/or order and are used to distinguish a component from another without limiting the components. It will be understood that when an element, such as a first element, is referred to as being (operatively or communicatively) "coupled with/to," or "connected with/to" another element, such as a second element, the first element can be coupled or connected with/to the second element directly or via a third element.

As used herein, the expression "configured to" may be interchangeably used with other expressions, such as "suitable for," "capable of," "modified to," "made to," "adapted to," "able to," or "designed to" in hardware or software in the context, and may indicate that a device can perform an operation together with another device or parts. For example, the expression "processor configured (or set) to perform A, B, and C" may indicate a generic-purpose processor, such as a central processing unit (CPU) or application processor (AP), that may perform the operations by executing one or more software programs stored in a memory device or an embedded processor for performing the operations.

Examples of the wireless power transmitter or electronic device according to embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a motion pictures experts group (MPEG) audio layer 3 (MP3) player, a medical device, a camera, or a wearable device. The wearable device may include at least one of an accessory-type device, such as a watch, ring, bracelet, anklet, necklace, glasses, contact lenses, or a head-mounted device (HMD), a fabric- or clothes-integrated device, such as electronic clothes, a body attaching-type device, such as a skin pad or tattoo, or a body implantable device. In some embodiments, examples of the wireless power transmitter or electronic device may include at least one of a TV, a set-top box wiredly or wirelessly interworking with a TV, a digital video disk (DVD) player, an audio player, a refrigerator, an air conditioner, a cleaner, an oven, a microwave oven, a washer, a drier, an air cleaner, a set-top box, a home automation control panel, a security control panel, a media box, a gaming console, an electronic dictionary, an electronic key, a camcorder, an electric car, or an electronic picture frame.

The wireless power transmitter or electronic device may include at least one of various medical devices, such as a blood sugar measuring device, a heartbeat measuring device, or a body temperature measuring device, a magnetic resource angiography (MRA) device, a magnetic resource imaging (MRI) device, a computed tomography (CT) device, an imaging device, or an ultrasonic device, a navigation device, a global navigation satellite system (GNSS) receiver, an event data recorder (EDR), a flight data recorder (FDR), an automotive infotainment device, an sailing electronic device, such as a sailing navigation device or a gyro compass, avionics, security devices, vehicular head units, industrial or home robots, drones, automated teller machines (ATMs), point of sales (POS) devices, or IoT devices, such as a light bulb, various sensors, a sprinkler, a fire alarm, a thermostat, a street light, a toaster, fitness equipment, a hot water tank, a heater, or a boiler.

According to various embodiments of the disclosure, examples of the wireless power transmitter or electronic device may at least one of part of a piece of furniture, building/structure or vehicle, an electronic board, an electronic signature receiving device, a projector, or various measurement devices for measuring water, electricity, gas, or electromagnetic waves. The wireless power transmitter or electronic device may be flexible or may be a combination of the above-enumerated electronic devices, and are not limited to the above-listed embodiments. As used herein, the term "user" may refer to a human or an artificial intelligence electronic device using the electronic device or the wireless power transmitter.

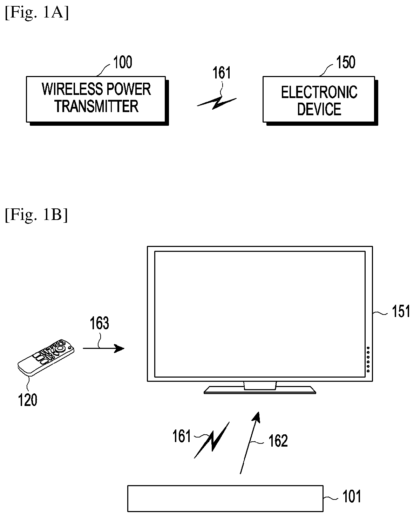

FIG. 1A illustrates a wireless power transmitter and an electronic device according to an embodiment.

Referring to FIG. 1A, a wireless power transmitter 100 wirelessly transmits power 161 to an electronic device 150 according to various charging schemes, such as an induction scheme. Adopting the induction scheme, the wireless power transmitter 100 may include, e.g., a power source, a direct current (DC)-alternating current (AC) converting circuit, an amplifying circuit, an impedance matching circuit, at least one capacitor, at least one coil, and a communication modulation/demodulation circuit.

The at least one capacitor together with the at least one coil may constitute a resonance circuit. The wireless power transmitter 100 may be implemented in a scheme defined in the wireless power consortium (WPC) standards (or Qi standards). For example, the wireless power transmitter 100 may transmit power 161 as per a resonance scheme, in which the wireless power transmitter 100 may include, e.g., a power source, a DC-AC converting circuit, an amplifying circuit, an impedance matching circuit, at least one capacitor, at least one coil, and an out-band communication circuit, such as a bluetooth^{®} low energy (BLE) communication circuit. The at least one capacitor and the at least one coil may constitute a resonance circuit. The wireless power transmitter 100 may be implemented in a scheme defined in the alliance for wireless power (A4WP) standards (or air fuel alliance (AFA) standards), and may include a coil that is capable of produce a magnetic field when letting an electric current flow thereacross by a resonance or induction scheme. The process of the wireless power transmitter 100 producing an induced magnetic field may be represented as the wireless power transmitter 100 wirelessly transmitting the power 161. The electronic device 150 may include a coil that produces an induced electromotive force by the magnetic field generated around and varying in magnitude over time. The process of the electronic device 150 producing an induced electromotive force through the coil may be represented as the electronic device 150 wirelessly receiving the power 161, such as by an electromagnetic wave scheme. Adopting the electromagnetic scheme, the wireless power transmitter 100 may include, e.g., a power source, a DC-AC converting circuit, an amplifying circuit, a distributing circuit, a phase shifter, a power transmission antenna array including a plurality of patch antennas, and an out-band communication circuit, such as a BLE communication module. The plurality of patch antennas each may form a radio frequency (RF) or electromagnetic wave. The electronic device 150 may include patch antennas capable of outputting electric current using RF waves generated around. The process of the wireless power transmitter 100 producing an RF wave may be represented as the wireless power transmitter 100 wirelessly transmitting the power 161. The process of the electronic device 150 outputting electric current from the patch antennas using RF waves may be represented as the electronic device 150 wirelessly receiving the power 161.

The wireless power transmitter 100 may communicate with the electronic device 150 as per an in-band scheme. The wireless power transmitter 100 or the electronic device 150 may vary the load (or impedance) on the data to be transmitted, according to, e.g., an on/off keying modulation scheme. The wireless power transmitter 100 or the electronic device 150 may determine data transmitted from the opposing device by measuring a variation in load or impedance based on a variation in the current, voltage, or power across the coil. For example, the wireless power transmitter 100 may communicate with the electronic device 150 as per an out-band scheme. The wireless power transmitter 100 or the electronic device 150 may communicate data using a communication circuit provided separately from the coil or patch antennas.

FIG. 1B illustrates a set-top box and a TV according to an embodiment.

The set-top box 101 may wirelessly transmit power 161 to a TV 151, may be an example of the wireless power transmitter 100 or the electronic device 150 wirelessly receiving power, may include a power transmitting circuit according to at least one of various wireless charging schemes as described above, and may transmit a communication signal 162 to the TV 151. For example, the communication signal 162 may include at least one of media data displayed on the TV 151, data for controlling wireless charging, or TV control data for controlling the operation of the TV 151, all of which data may be transmitted and received by the same communication or a different communication scheme.

For example, the set-top box 101 may transmit the media data to the TV 151 as per a communication scheme defined by the wireless gigabit alliance (Wi-gig), transmit and receive the data for controlling wireless charging using a BLE module, and transmit the TV control data to the TV 151 using an infrared (IR) module, but the communication is not limited to a particular scheme. For example, the TV 151 may include an IR module for receiving a control signal 163 as per an IR communication scheme from a control device 120, e.g., a remote controller, and may receive a communication signal 162 containing TV control data from the set-top box 101. The control signal 163, transmitted from the control device 120, may contain a command for performing an operation, may also be referred to as an operation performing command, and may transmit the control signal 163 in any communication scheme without being limited to a particular scheme. According to an embodiment, at least two of the media data, data for controlling wireless charging, and the TV control data may be transmitted and received by a single communication module. For example, the set-top box 101 may transmit the media data to the TV 151 through a Wi-gig communication scheme and the data for controlling wireless charging and the TV control data through a BLE module.

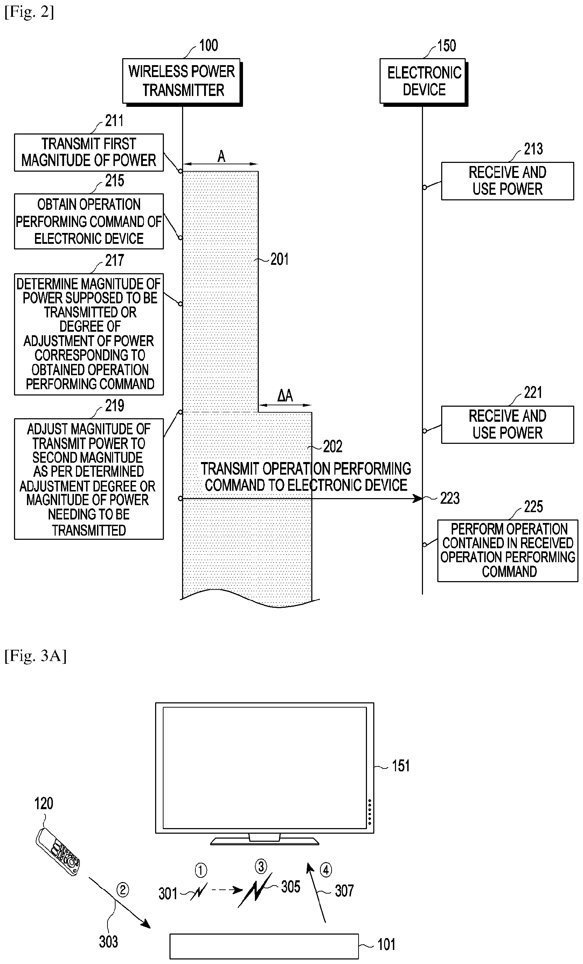

FIG. 2 illustrates operations of a wireless power transmitter and an electronic device according to an embodiment.

In FIG. 2, the wireless power transmitter 100 transmits power 201 of a first magnitude A in step 211. As set forth herein, the "wireless power transmitter 100 or the electronic device 150 performs a particular operation" may indicate that various hardware devices, e.g., a control circuit, such as a processor, a coil, or a patch antenna, included in the wireless power transmitter 100 or the electronic device 150 performs the particular operation, may indicate that the processor controls another hardware device to perform the particular operation, or may indicate that the processor or another hardware device triggers the particular operation as an instruction for performing the particular operation, which is stored in a storage circuit, such as a memory of the wireless power transmitter 100 or the electronic device 150, and is executed. The "wireless power transmitter 100 transmits the power 201 of the first magnitude A" may also indicate that the wireless power transmitter 100 applies a current or voltage of a magnitude corresponding to a power of the first magnitude A to a coil or patch antenna.

The electronic device 150 wirelessly receives and uses the power 201 in step 213. For example, where the electronic device 150 is a TV 151 as shown in FIG. 1B, the electronic device 150 may display media data through a display and using the received power 201. The magnetic field or RF wave corresponding to the power 201 of the first magnitude A may attenuate according to the distance between the wireless power transmitter 100 and the electronic device 150. Thus, the magnitude of the power 201 that the electronic device 150 receives may be less than the first magnitude A. The "wireless power transmitter 150 receives the power 201 of the first magnitude A" may indicate that a current or voltage is produced from a coil or patch antenna by the power 201, such as a magnetic field or RF wave, of the first magnitude A transmitted from the wireless power transmitter 100.

The wireless power transmitter 100 obtains a command for performing the operation of the electronic device 150 in step 215. For example, the wireless power transmitter 100 may obtain an operation performing command for the electronic device 150 by obtaining TV control data transmitted from the control device 120 as shown in FIG. 1B as per an IR scheme, BLE scheme, Wi-Fi scheme, or zigbee^{®} scheme. The wireless power transmitter 100 may obtain an operation performing command, "increase screen brightness + 1," from the control device 120, which may also transmit a communication signal containing the information, "increase screen brightness + 1," to the wireless power transmitter 100. In addition, the wireless power transmitter 100 may receive a communication signal corresponding to a "right shift key pressed" from the control device 120 and obtain the operation performing command, "increase screen brightness by one," by applying the "right shift key pressed" corresponding to the current state of the electronic device 150, such as the state of entering into the menu for adjusting screen brightness.

For example, the wireless power transmitter 100 may sense the user's voice or motion and obtain an operation performing command by analyzing the result of the sensing, may obtain the operation performing command, "increase screen brightness by one," by applying at least one of automatic speech recognition or natural language understanding to the user's voice sensed, may sense and analyze the user's motion, and may obtain the operation performing command, "increase screen brightness by one," designated corresponding to the motion determined as a result of the analysis.

For example, the wireless power transmitter 100 may obtain an operation performing command as a hardware button or soft key provided in the wireless power transmitter 100 as designated, and may obtain the operation performing command, "increase screen brightness by one," by applying the designation of the hardware button to the current state, such as the state of entering into the menu for adjusting screen brightness. For example, the wireless power transmitter 100 may obtain an operation performing command received based on internet protocol (IP) communication. Another electronic device, such as a smartphone, located in a remote site may display a screen brightness control UI and may obtain the operation performing command, "increase screen brightness by one," from the user. The other electronic device may transmit the operation performing command, "increase screen brightness by one," to the wireless power transmitter 100 based on IP communication. For example, the wireless power transmitter 100 may detect that a reserved execution condition preset by the user is met and may obtain an operation performing command corresponding to the reserved execution.

Various reserved execution conditions, such as "at 11PM" or "when external brightness is up," and their corresponding operation performing command, "increase screen brightness +1," may previously be designated for the wireless power transmitter 100. The wireless power transmitter 100 may detect that the reserved execution condition is met and may obtain the operation performing command, "increase screen brightness by one," corresponding thereto. For example, the wireless power transmitter 100 may obtain an operation performing command preset corresponding to an abnormal circumstance, and may previously store information about the correlation between abnormal circumstances, such as high temperature, high voltage, high current, or detecting a foreign body, and operation performing commands. Upon detecting an abnormal circumstance, the wireless power transmitter 100 may obtain the operation performing command corresponding to the detected abnormal circumstance.

The wireless power transmitter 100 may determine the degree of adjusting power corresponding to the obtained operation performing command or the magnitude of power that needs to be transmitted in step 217. For example, the wireless power transmitter 100 may previously store information, such as a lookup table in Table 1 below, about the correlation between operation performing commands and power adjustment degrees and may determine the power adjustment degree designated corresponding to the obtained operation performing command.

**[Table 1]**

| Operation performing command | Degree of adjusting power |
|---|---|
| increase screen brightness by one | + 0.3W |
| decrease screen brightness by one | - 0.3W |
| increase volume by one | + 0.1W |
| decrease volume by one | - 0.1W |

The wireless power transmitter 100 may determine the power adjustment degree corresponding to the obtained operation performing command using the correlation information as set forth in Table 1. The power adjustment degree shown in Table 1 may be set as, e.g., the degree of adjusting the magnitude of power applied to the coil or patch antenna or output from the power source. However, this is merely an example, and the power adjustment degree may also be set as the degree of adjusting voltage or current. Power adjustment degrees may be stored in association with various operation performing commands, such as for performing data communication, three-dimension (3D) processing, or high-definition processing, requiring that power consumption be varied, as well as increasing or decreasing screen brightness or volume. The power adjustment degrees may previously be stored upon manufacturing the wireless power transmitter 100 or may also be renewed afterwards. For example, different power adjustment degrees may be applied depending on the distance between the wireless power transmitter 100 and the electronic device 150.

The wireless power transmitter 100 may update the power adjustment degrees by receiving and analyzing the feedback for the magnitude of power that the electronic device 150 receives. Where the correlation information shown in Table 1 is preset and the distance between the wireless power transmitter 100 and the electronic device 150 is greater than a distance preset, the wireless power transmitter 100 may set the power adjustment degree to be greater than the power adjustment degree set forth in Table 1. In such case, the wireless power transmitter 100 may not use the information about the current state of the electronic device 150 since the wireless power transmitter 100 may determine the power adjustment degree depending on operation performing commands.

The electronic device 150 may also determine the power adjustment degree using the correlation information as set forth in Table 1, which is described below in greater detail. Although Table 1 sets forth screen brightness and volume information, it will readily be appreciated by one of ordinary skill in the art that Table 1 may add information related to the power consumption of the electronic device 150, such as brightness-and-darkness or contrast of the screen. The power adjustment degrees set forth in Table 1 may be set as a percentage of the maximum power.

The wireless power transmitter 100 may previously store correlation information, such as a lookup table, between the state of the electronic device 150 and the power needing to be transmitted, and may determine the power needing to be transmitted, which corresponds to a predicted state determined by applying an occurrence to the current state. For example, the wireless power transmitter 100 may store correlation information as shown in Table 2 below.

**[Table 2]**

| State of electronic device | Power to be transmitted |
|---|---|
| Initial state | 30W |
| Screen brightness 1 | 45W |
| Screen brightness 2 | 60W |
| Screen brightness 3 | 75W |

For example, the wireless power transmitter 100 may determine that the electronic device 150 is currently in the screen brightness 1 state, and may periodically or aperiodically transmit its current state to the wireless power transmitter 100. The wireless power transmitter 100 may determine a predicted state, "screen brightness 2," for the electronic device 150 by applying the operation performing command, "increase screen brightness by one," to the current state of the electronic device 150, and may determine the power, such as 60W, to be transmitted in the predicted state. Alternatively, the wireless power transmitter 100 may obtain an operation performing command, "change screen brightness to screen brightness 3." In this case, the wireless power transmitter 100 may immediately determine the power, such as 75W, that needs to be transmitted, without using the current state of the electronic device 150. The power adjustment degree shown in Table 2 may be set as, e.g., the magnitude of power applied to the coil or patch antenna or the magnitude of power output from the power source. However, this is merely an example, and the power adjustment degree may also be set as the magnitude of voltage or current. Information about the power needing to be transmitted may be determined experimentally or information pre-designated in the wireless power transmitter 100 may be updated. The wireless power transmitter 100 may update the information about the power needing to be transmitted, by receiving and analyzing feedback for the distance to the electronic device 150 or the magnitude of power that the electronic device 150 receives.

The wireless power transmitter 100 may also store correlation information between the states of the electronic device 150 and the power consumptions of the electronic device 150 as set forth in Table 3 below.

**[Table 3]**

| State of electronic device | Power consumption of electronic device |
|---|---|
| Initial state | 20W |
| Screen brightness 1 | 35W |
| Screen brightness 2 | 40W |
| Screen brightness 3 | 45W |

The correlation information set forth in Table 3 may be determined upon manufacturing the electronic device 150 and may be previously retained in the electronic device 150 or wireless power transmitter 100, or the correlation information may be received by the wireless power transmitter 100 from the electronic device 150. The wireless power transmitter 100 may identify the power consumption of the electronic device 150 corresponding to a predicted state by applying an operation performing command, such as "increase screen brightness by one", to the current state of the electronic device 150 or identify the power consumption of the electronic device 150 corresponding to a predicted state contained in an operation performing command, such as "adjust screen brightness to screen brightness 3".

The wireless power transmitter 100 may adjust the magnitude of transmit power by referring to the power consumption corresponding to the predicted state for the electronic device. For example, where the power consumption corresponding to the predicted state is 40W, the wireless power transmitter 100 may transmit power greater than 40W. The wireless power transmitter 100 may apply an offset, such as 10W, to the power consumption corresponding to the predicted state, thus transmitting a power of 50W. The offset may be previously set given that the magnetic field or RF wave attenuates or may be set by the wireless power transmitter 100.

The wireless power transmitter 100 may determine the offset based on the distance between the wireless power transmitter 100 and the electronic device 150 or using feedback for information about the magnitude of the power received from the electronic device 150. For example, where the wireless power transmitter 100 transmits a power of 30W, and the electronic device 150 receives feedback of information indicating that it has received a power of 20W, the wireless power transmitter 100 may set the offset corresponding to the 20W power consumption as 10W or more, and may set the same or a different offset per power consumption. For example, the lookup table of Table 2 may result from applying the offset to the lookup table of Table 3.

The electronic device 150 may determine information about the magnitude of power to be transmitted from the wireless power transmitter 100, according to the correlation information as set forth in Table 3, and may transmit the information about the magnitude of power to the wireless power transmitter 100 which may adjust the magnitude of power to be transmitted using the received magnitude information. The correlation information as set forth in Table 3 may be represented as a range of the power consumption of the electronic device 150.

The wireless power transmitter 100 may determine the magnitude of power needing to be transmitted, corresponding to an operation performing command by calculation, but not by the lookup table, and may store an equation defined together with coefficients experimentally determined for the relationship among a diversity of variables, such as the magnitude of power transmitted from the wireless power transmitter 100, the magnitude of power received by the electronic device 150, the distance between the wireless power transmitter 100 and the electronic device 150, the operation performed by the electronic device 150, the transmission/reception efficiency of power, and the hardware efficiency of the electronic device 150. The wireless power transmitter 100 may determine, e.g., the magnitude of transmit power by applying values of the identified variables to the equation. The electronic device 150 may perform the above calculation and may transmit, to the wireless power transmitter 100, information about the magnitude of power that the wireless power transmitter 100 needs to transmit, which has been obtained by a result of performing the calculation.

The wireless power transmitter 100 adjusts the magnitude of power 202 transmitted to a second magnitude (A+ΔA) according to the determined adjustment degree or the magnitude of power to be transmitted.

In step 221, the electronic device 150 receives and uses the power 202. In step 223, after increasing the magnitude of power, the wireless power transmitter 100 transmits an operation performing command to the electronic device 150. In step 225, the electronic device 150 may perform an operation contained in the received operation performing command. As set forth above, since the electronic device 150 performs a particular operation after receiving a sufficient magnitude of power 202 to perform the particular operation, the electronic device 150 may be prevented from turning off due to a failure to receive power required to perform the particular operation.

FIG. 3A illustrates a wireless power transmitter, an electronic device, and a control device according to an embodiment.

In FIG. 3A, a set-top box 101 may transmit a first magnitude of power 301 at a first time (1), and may obtain a control signal 303 from a control device 120 at a second time (2). The control device 120 may transmit the control signal 303 through, e.g., an IR transmission module, in an IR communication scheme. A TV 151 may not include an IR reception module, in which case the TV 151 may not receive the control signal 303. The set-top box 101 may transmit a second magnitude of power 305 at a third time (3), may determine the magnitude of power 305 in various schemes as set forth above in connection with FIG. 2, and may transmit the second magnitude of power 305 according to a result of the determination. The set-top box 101 may transmit an operation performing command 307 corresponding to the control signal 303 to the TV 151 at a fourth time (4). The set-top box 101 may transmit the operation performing command 307 to the TV 151 through a scheme, such as a BLE scheme, but not an IR scheme. The TV 151 may perform an operation contained in the received operation performing command 307. Accordingly, the TV 151 may receive a sufficient magnitude of power 305 to perform the operation contained in the operation performing command 307.

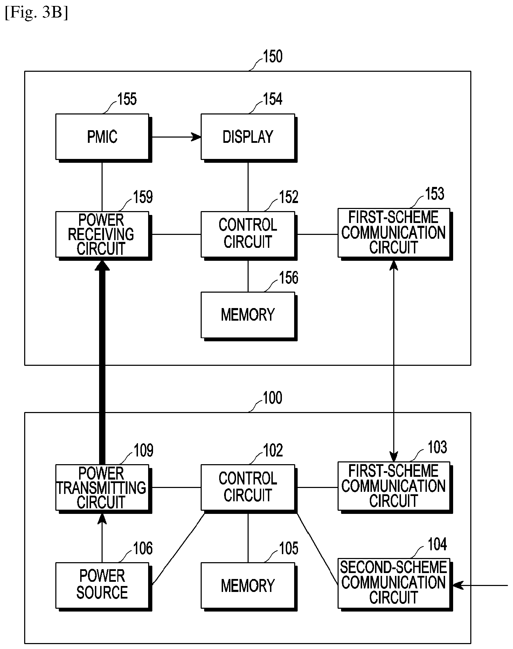

FIG. 3B illustrates a wireless power transmitter and an electronic device according to an embodiment.

In FIG. 3B, a wireless power transmitter 100 includes a power transmitting circuit 109, a control circuit 102, a first-scheme communication circuit 103, a second-scheme communication circuit 104, a memory 105, and a power source 106. An electronic device 150 includes a power receiving circuit 159, a control circuit 152, a first-scheme communication circuit 153, a display 154, a power management integrated circuit (PMIC) 155, and a memory 156.

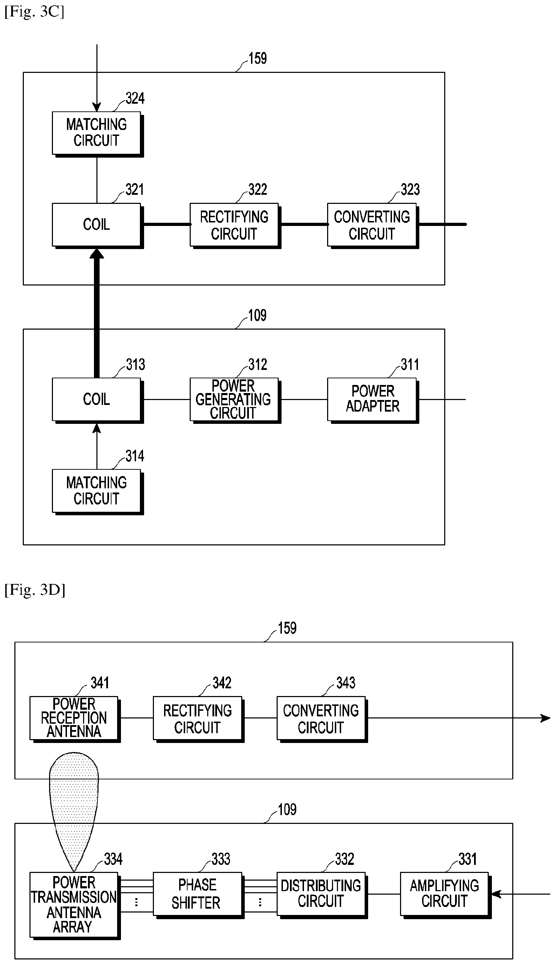

The power transmitting circuit 109 may wirelessly transmit power as per at least one of an induction scheme, a resonance scheme, or an electromagnetic wave scheme to the power receiving circuit 159. The detailed configurations of the power transmitting circuit 109 and the power receiving circuit 159 are described below in greater detail with reference to FIGs. 3C and 3D. The control circuit 102 may control the magnitude of power that the power transmitting circuit 109 transmits, such as the magnitude of power output from the power source 106, and control the gain of a power amplifier included in the power transmitting circuit 109, thereby controlling the magnitude of power that the power transmitting circuit 109 transmits.

The control circuit 102 may adjust the magnitude of power output from the power source 106 by controlling the duty cycle or frequency of power output from the power source 106, and may control the magnitude of power applied to the power transmitting circuit 109 by controlling the magnitude of the bias voltage of the power amplifier. The control circuit 102 or the control circuit 152 may be implemented in various circuits capable of performing calculation, such as but not limited to aCPU or other general-purpose processors, a mini-computer, a microprocessor, a micro controlling unit (MCU), or a field programmable gate array (FPGA). The control circuit 102 may control at least one of the power source 106 or the power transmitting circuit 109 to transmit, e.g., a first magnitude of power.

The power receiving circuit 159 may wirelessly receive power as per at least one of an induction scheme, a resonance scheme, or an electromagnetic wave scheme from the power transmitting circuit 109, and may perform power processing, such as rectifying the received alternating current (AC) power into a direct current (DC) waveform, converting the voltage, or regulating the power. The PMIC 155 may process the power, which has been received and processed, to be appropriate for the hardware, such as the display 154, and transfer to each hardware device.

The display 154 may display media data received from the set-top box 101. The electronic device 150 may include various hardware devices as well as the display 154. The control circuit 152 may control the overall operation of the electronic device 150. The memory 156 may store instructions for performing the overall operation of the electronic device 150 or may store information about an equation to calculate the magnitude of power needing to be transmitted or correlation information as set forth in Tables 1 to 3. The display 154 may include, e.g., a liquid crystal display (LCD), a light emitting diode (LED) display, an organic light emitting diode (OLED) display, or a microelectromechanical systems (MEMS) display, or an electronic paper display.

The second-scheme communication circuit 104 may receive a control signal from, e.g., the control device 120. For example, the second-scheme communication circuit 104 may be an IR reception module. The control circuit 102 may adjust the magnitude of transmit power using the control signal. The memory 105 may store instructions for performing the operation of the wireless power transmitter 100 and may store information about an equation to calculate the magnitude of power needing to be transmitted or correlation information as set forth in Tables 1 to 3. The memory 105 or the memory 156 may be implemented in various types, such as a read only memory (ROM), a random-access memory (RAM), or a flash memory, but not limited in type thereto.

The control circuit 102 controls at least one of the power source 106 or the power transmitting circuit 109 to transmit, e.g., a second magnitude of power, corresponding to the control signal. After adjusting the magnitude of power, the control circuit 102 transmits an operation performing command through the first-scheme communication circuit 103 to the first-scheme communication circuit 153 of the electronic device 150. The control circuit 152 of the electronic device 150 obtains the operation performing command through the first-scheme communication circuit 153, and corresponding thereto, may perform an operation contained in the operation performing command. For example, the control circuit 152 may increase the brightness of the display 154 and the magnitude of current input from the PMIC 155 to the display 154. The media data may be transmitted through the first-scheme communication circuits 103 and 153 or through other communication circuits.

FIG. 3C illustrates a power transmitting circuit and a power receiving circuit as per an induction scheme or resonance scheme according to an embodiment.

In FIG. 3C, a power transmitting circuit 109 may include a power adapter 311, a power generating circuit 312, a coil 313, and a matching circuit 314. The power adapter 311 may receive power from the power source 106 and provide the power to the power generating circuit 312, which may convert the received power into, e.g., an AC waveform or may amplify the received power and transfer the amplified power to the coil 313. The frequency of the AC waveform may be set to be a value from 100kHz to 205kH or 6.78MHz depending on a standard, but is not limited thereto. When power is applied to the coil 313, an induced magnetic field that varies in magnitude over time may be produced across the coil 313, thus enabling wireless transmission of power. Although not shown, capacitors that, along with the coil 313, constitute a resonance circuit may be further included in the power transmitting circuit 109. The matching circuit 314 may impedance-match the power transmitting circuit 109 with the power receiving circuit 159 by varying at least one of the capacitance or reactance of the circuit connected with the coil 313 under the control of the control circuit 102. An induced electromotive force may be generated at the coil 321 of the power receiving circuit 159 by the magnetic field which varies in magnitude over time, and accordingly, the power receiving circuit 159 may wirelessly receive power.

The rectifying circuit 322 may rectify the AC waveform of power received. A converting circuit 323 may adjust the voltage of the power rectified and transfer the voltage to the PMIC 155. The power receiving circuit 159 may further include a regulator, or the converting circuit 323 may be replaced with a regulator. The matching circuit 324 may impedance-match the power transmitting circuit 109 with the power receiving circuit 159 by varying at least one of the capacitance or reactance of the circuit connected with the coil 321 under the control of the control circuit 152.

FIG. 3D illustrates a power transmitting circuit and a power receiving circuit as per an electromagnetic wave scheme according to an embodiment.

The power transmitting circuit 109 may include an amplifying circuit 331, a distributing circuit 332, a phase shifter 333, and a power transmission antenna array 334. The power receiving circuit 159 may include a power reception antenna 341, a rectifying circuit 342, and a converting circuit 343.

The amplifying circuit 331 may amplify the power received from the power source 106 and provide the power to the distributing circuit 332. The amplifying circuit 331 may be implemented as various amplifiers, such as a drive amplifier (DA), a high-power amplifier (HPA), a gain block amplifier (GBA), or a combination thereof, but is not limited in type thereto. The distributing circuit 332 may distribute the power output from the amplifying circuit 331 into a plurality of paths, and may be any circuit capable of distributing input power or signal in this manner. For example, the distributing circuit 332 may distribute power into as many paths as the number of patch antennas included in the power transmission antenna array 334.

The phase shifter 333 may shift (or delay) phase of each of the plurality of AC power signals provided from the distributing circuit 332. There may be provided a plurality of phase shifters 333. For example, the number of the phase shifters 333 may be the same as the number of patch antennas included in the power transmission antenna array 334. A hardware device, such as the Hittite Microwave Corporation (HMC) 642 or the HMC1113, may be used as the phase shifter 333. The degree of shifting by each phase shifter 333 may be controlled by the control circuit 102, which may determine the location of the electronic device 150 and may phase-shift each of the plurality of AC power signals to enable the RF waves to constructively interfere with each other, i.e., to be beamformed, in the location of the electronic device 150 or the power reception antenna 341.

Each of the plurality of patch antennas included in the power transmission antenna array 334 may generate a sub RF wave based on the received power. The RF waves, which result from interference among the sub RF waves, may be converted into current, voltage, or power at the power reception antenna 341 and outputted. The power reception antenna 341 may include a plurality of patch antennas and may use ambient RF waves, i.e., electromagnetic waves, to produce AC waveforms of current, voltage, or power which may be referred to as "received power." The rectifying circuit 342 may rectify the received power into a DC waveform. The converting circuit 343 may increase or decrease the voltage of the DC waveform of power to a preset value and output the voltage to the PMIC 155.

At least one of the power transmitting circuit 109 or the power receiving circuit 159 may include the hardware according to the induction scheme or resonance scheme of FIG. 3C or the hardware according to the electromagnetic wave scheme of FIG. 3D. In this case, the control circuit 102 or the control circuit 152 may choose a charging scheme as per various conditions and may control the hardware corresponding to the chosen charging scheme to be driven, or may adopt all of the induction scheme or resonance scheme and the electromagnetic wave scheme and may drive all hardware included to transmit and receive power.

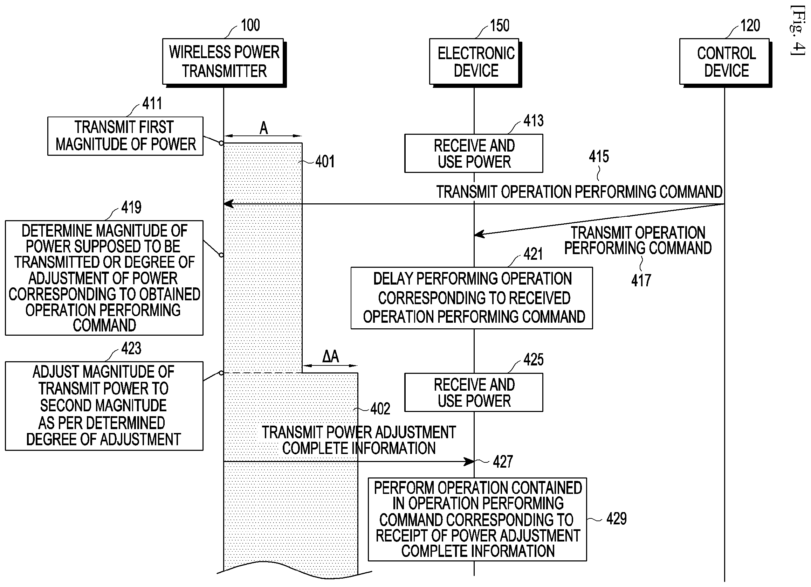

FIG. 4 illustrates operations of a wireless power transmitter, an electronic device, and a control device according to an embodiment.

In FIG. 4, a wireless power transmitter 100 transmits power 401 of a first magnitude A in step 411. In step 413, the electronic device 150 receives and uses the power 401. In step 415, the control device 120 may transmit an operation performing command to the wireless power transmitter 100. In step 417, the control device 120 may transmit the operation performing command to the electronic device 150. The control device 120 may broadcast or multicast operation performing commands, and the wireless power transmitter 100 and electronic device 150 may thus obtain operation performing commands. For example, when the control device 120 includes an IR transmission module, the control device 120 may transmit IR communication signals, and when the electronic device 150 includes an IR reception module, the control device 120 may receive IR communication signals.

The wireless power transmitter 100 may determine the degree of adjusting power corresponding to the obtained operation performing command or the magnitude of power needing to be transmitted in step 419. In step 421, the electronic device 150 may delay performing an operation corresponding to the received operation performing command. Accordingly, the electronic device 150 may be precluded from performing the corresponding operation before receiving a sufficient magnitude of power to perform the operation contained in the operation performing command.

In step 423, the wireless power transmitter 100 adjusts the magnitude of power 402 transmitted to a second magnitude (A+ΔA) according to the determined adjustment degree. In step 425, the electronic device 150 may receive and use the power. In step 427, the wireless power transmitter 100 may transmit power adjustment complete information to the electronic device 150. In step 429, the electronic device 150 may perform an operation contained in the operation performing command, corresponding to the reception of the power adjustment complete information.

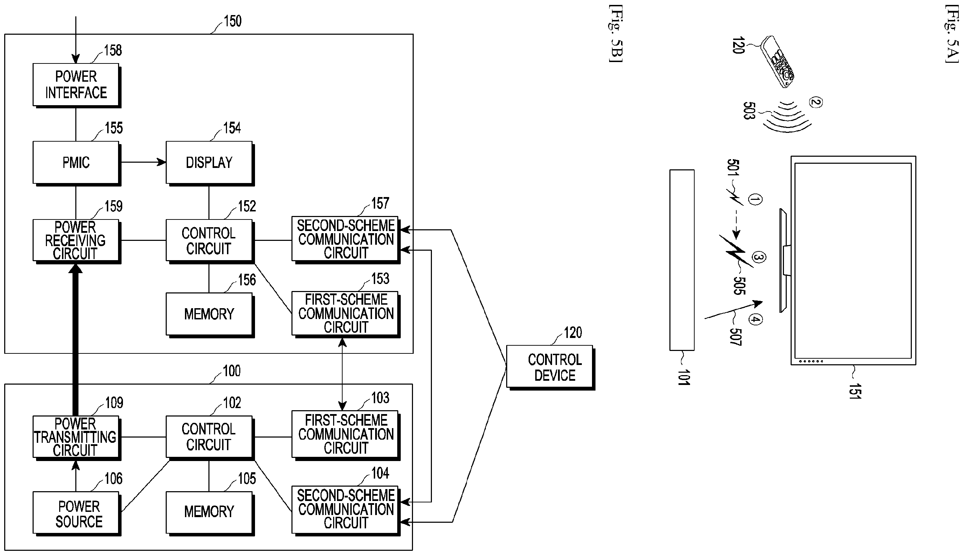

FIG. 5A illustrates operations of a set-top box, a TV, and a control device according to an embodiment.

In FIG. 5A, a set-top box 101 may transmit a first magnitude of power 501 at a first time (1), and the control device 120 may broadcast control signals 503 at a second time (2), and the set-top box 101 and the TV 151 may thus obtain control signals 503. The control device 120 may transmit the control signal 503 through, e.g., an IR transmission module, in an IR communication scheme. The TV 151, although having received a control signal 503, may delay executing the operation performing command contained therein. The set-top box 101 may transmit a second magnitude of power 505 at a third time (3), may determine the magnitude of power 505 in various schemes as set forth above in connection with FIG. 2 and may transmit the second magnitude of power 505 according to a result of the determination.

The set-top box 101 may transmit power adjustment complete information 507 to the TV 151 at a fourth time (4) after adjusting the magnitude of transmit power, through a BLE scheme, different from the IT scheme or IR scheme. The TV 151 may perform the delayed operation contained in the operation performing command, corresponding to the received power adjustment complete information 507. Accordingly, the TV 151 may receive a sufficient magnitude of power 505 to perform the operation contained in the operation performing command.

FIG. 5B illustrates a wireless power transmitter and an electronic device according to an embodiment. As compared with the embodiment of FIG. 3B, the electronic device 150 may further include a second-scheme communication circuit 157 and a power interface 158. The second-scheme communication circuit 157 may adopt the same communication scheme as the control device 120 and the second-scheme communication circuit 104 of the wireless power transmitter 100. The control circuit 152 of the electronic device 150 may receive a control signal from the control device 120 through the second-scheme communication circuit 104. The electronic device 150 may delay executing the operation performing command contained in the control signal. The control circuit 102 of the wireless power transmitter 100 may receive a control signal from the control device 120 through the second-scheme communication circuit 104, may determine the degree of adjustment or the magnitude of power to be transmitted to the electronic device 150, corresponding to the control signal, and may control at least one of the power source 106 or the power transmitting circuit 109 to adjust the magnitude of power to be transmitted, according to a result of the determination.

After adjusting the magnitude of power to be transmitted, the control circuit 102 may transmit power adjustment complete information through at least one of the first-scheme communication circuit 103 or the second-scheme communication circuit 104. The control circuit 152 of the electronic device 150 may receive the power adjustment complete information through at least one of the first-scheme communication circuit 153 or the second-scheme communication circuit 157, and may perform the delayed operation contained in the operation performing command corresponding to the reception of the power adjustment complete information. The power interface 158 may wiredly receive power from the outside.

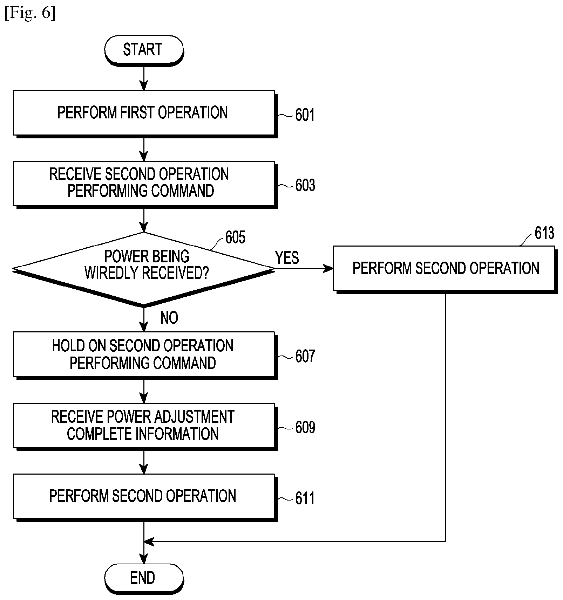

FIG. 6 illustrates operations of an electronic device according to an embodiment.

In step 601, the electronic device 150 may perform control to execute a first operation. In step 603, the electronic device 150 may receive a second operation performing command. In step 605, the electronic device 150 may determine whether power is being received wiredly through the power interface 158. When the power is received from the power interface 158, the control circuit 152 may determine whether the power is wiredly provided based on sensing data about voltage, current, or power from a sensor connected where the voltage, current, or power varies in magnitude.

Unless the power is wiredly received, the electronic device 150 may delay the second operation performing command contained in the control signal first received through the second-scheme communication circuit 157 in step 607. In step 609, the electronic device 150 may receive power adjustment complete information from the wireless power transmitter 100. Upon receipt of the power adjustment complete information, the electronic device 150 may perform the delayed second operation in step 611. Where the power is wiredly received, the electronic device 150 may perform the second operation in step 613. The control circuit 152 may immediately execute the operation performing command contained in the control signal received through the second-scheme communication circuit 157.

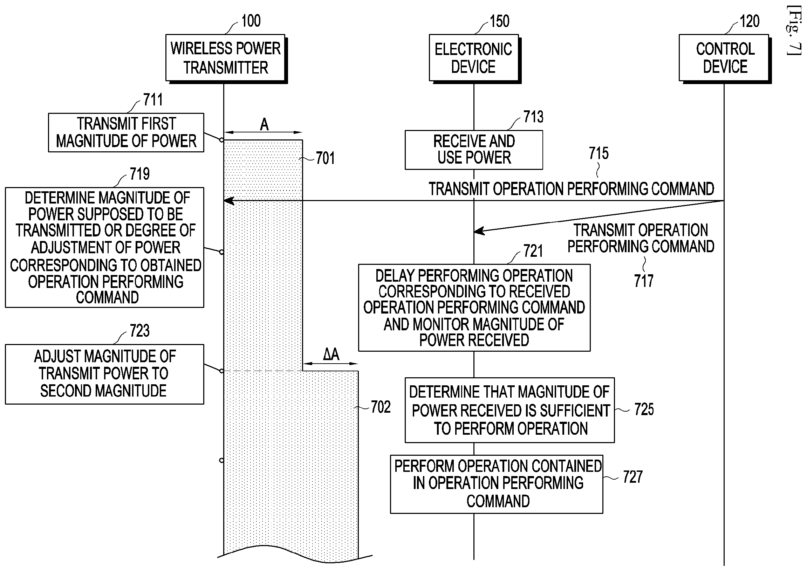

FIG. 7 illustrates operations of a wireless power transmitter, an electronic device, and a control device according to an embodiment.

A wireless power transmitter 100 transmits power 701 of a first magnitude A in step 711. In step 713, the electronic device 150 receives and uses the power. In step 715, the control device 120 may transmit an operation performing command to the wireless power transmitter 100. In step 717, the control device 120 may transmit the operation performing command to the electronic device 150. The wireless power transmitter 100 may determine the degree of adjusting power corresponding to the obtained operation performing command or the magnitude of power needing to be transmitted in step 719. In step 721, the electronic device 150 delays performing the operation corresponding to the received operation performing command and monitor the magnitude of power received. For example, the electronic device 150 may include a sensor capable of sensing the magnitude of current, voltage, or power at, at least, one input terminal or output terminal of the hardware included in the power receiving circuit 159, and may monitor the magnitude of power received using data from the sensor. In step 723, the wireless power transmitter 100 adjusts the magnitude of power 703 transmitted to a second magnitude (A+ΔA) according to the determined adjustment degree or magnitude of power. In step 725, the electronic device 150 may determine that the magnitude of power received is sufficient to perform the operation. For example, the electronic device 150 may store the correlation information, such as the correlation information set forth in Table 3, between the operation contained in the received operation performing command and the power consumption. Considering both the power currently being consumed and the power consumption added by the operation contained in the operation performing command, the electronic device 150 may determine whether the magnitude of power received is sufficient to perform both the operation being currently performed and the operation contained in the operation command. Upon determining that a sufficient magnitude of power is received, the electronic device 150 may perform the operation contained in the operation performing command in step 727.

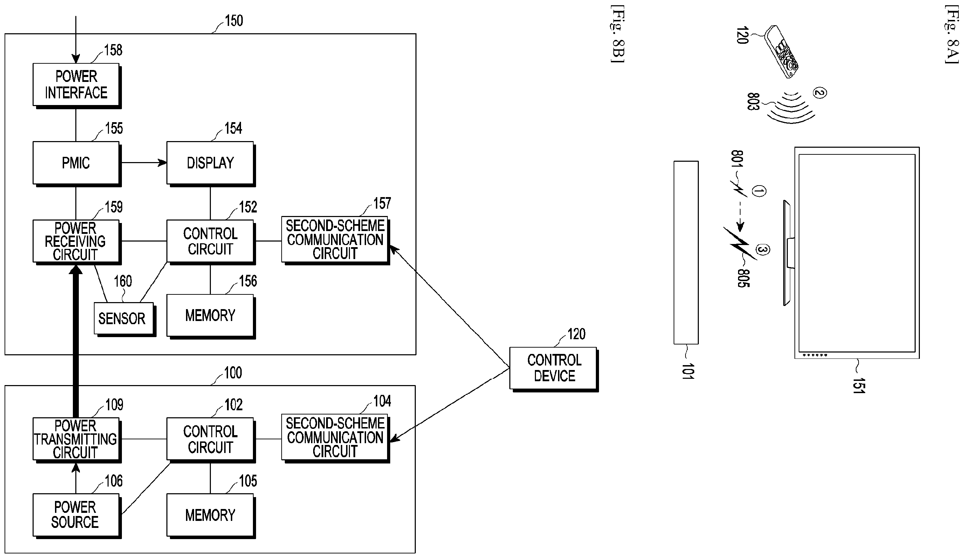

FIG. 8A illustrates operations of a set-top box, a TV, and a control device according to an embodiment.

In FIG. 8A, a set-top box 101 may transmit a first magnitude of power 801 at a first time (1), and the control device 120 may broadcast control signals 803 at a second time (2), and the set-top box 101 and the TV 151 may thus obtain control signals 803. The control device 120 may transmit the control signal 803 through, e.g., an IR transmission module, in an IR communication scheme. The TV 151, although having received the control signal 803, may delay executing the operation performing command contained therein. The set-top box 101 may transmit a second magnitude of power 805 at a third time (3), may determine the magnitude of power 805 in various schemes as set forth above in connection with FIG. 2 and may transmit the second magnitude of power 805 according to a result of the determination. At a fourth time (4), the TV 151 may identify that the magnitude of power received is greater than the power consumption for executing the operation performing command contained in the control signal 803 and the operation being currently performed. The TV 151 may execute the delayed operation performing command contained in the control signal 803.

FIG. 8B illustrates a wireless power transmitter and an electronic device according to an embodiment. As compared with the embodiment of FIG. 3B, the wireless power transmitter 100 may not include the first-scheme communication circuit 103, and the electronic device 150 may further include a second-scheme communication circuit 157, a power interface 158, and a sensor 160. The second-scheme communication circuit 157 may adopt the same communication scheme as the control device 120 and the second-scheme communication circuit 104 of the wireless power transmitter 100. The control circuit 152 of the electronic device 150 may receive a control signal from the control device 120 through the second-scheme communication circuit 104. The electronic device 150 may delay executing the operation performing command contained in the control signal. The control circuit 102 of the wireless power transmitter 100 may receive a control signal from the control device 120 through the second-scheme communication circuit 104, may determine the degree of adjustment or the magnitude of power to be transmitted to the electronic device 150, corresponding to the control signal, and may control at least one of the power source 106 or the power transmitting circuit 109 to adjust the magnitude of power to be transmitted, according to a result of the determination.

The sensor 160 may sense the magnitude of at least one of the current, voltage, or power at the input terminal or output terminal of at least one hardware device in the power receiving circuit 159, and may perform the sensing when the magnitude of at least one of the voltage, current, or power is varied as the magnetic field or RF wave emitted from the power transmitting circuit 109 varies in strength, such as the input terminal or output terminal of the rectifying circuit. The control circuit 152 may identify the magnitude of power received based on sensing data obtained through the sensor 160, may determine whether the magnitude of power received is sufficient to execute the operation performing command contained in the control signal and other operations being currently performed, and may determine, e.g., whether the magnitude of power received is greater than the power consumption in the state varied as the operation is performed. Alternatively, the control circuit 152 may determine whether an increment in the magnitude of power received is greater than the power consumption required for performing the operation.

The control circuit 152 may determine whether the magnitude of power received is sufficient to perform the operation, given the efficiency of the power processing hardware, such as the coil, resonance circuit, patch antennas, rectifying circuit, converting circuit, or PMIC, or the power consuming display, such as the display,. For example, when the sensor 160 measures current and voltage at the output terminal of the rectifying circuit, the control circuit 152 may determine whether a value obtained by considering the efficiency of the hardware devices, such as the converting circuit, PMIC, and display, downstream of the rectifying circuit with respect to the magnitude of power (i.e., the product of current and voltage) at the output terminal of the rectifying circuit is greater than the power consumption of the overall electronic device 150 predicted by the operation contained in the control signal. Upon determining that the magnitude of power is sufficient to perform the operation contained in the control signal, the control circuit 152 may perform the delayed operation contained in the operation performing command.

The power interface 158 may wiredly receive power from the outside, in which case the control circuit 152 may immediately perform the operation contained in the control signal without delay.

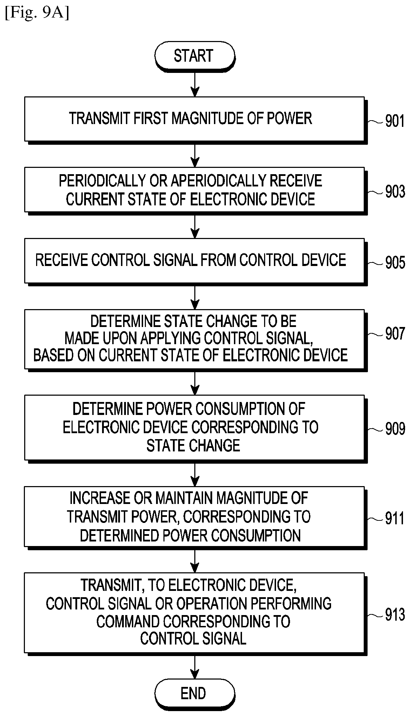

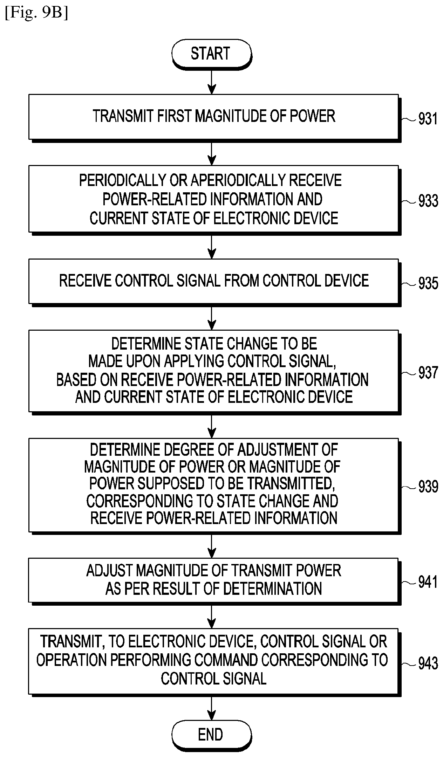

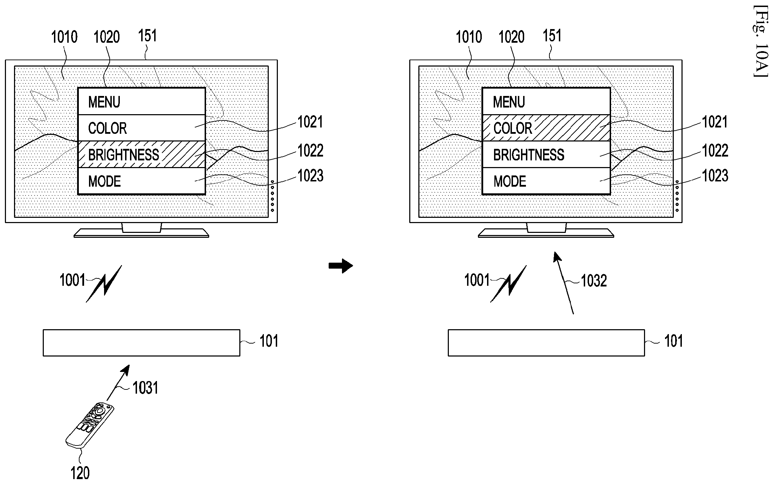

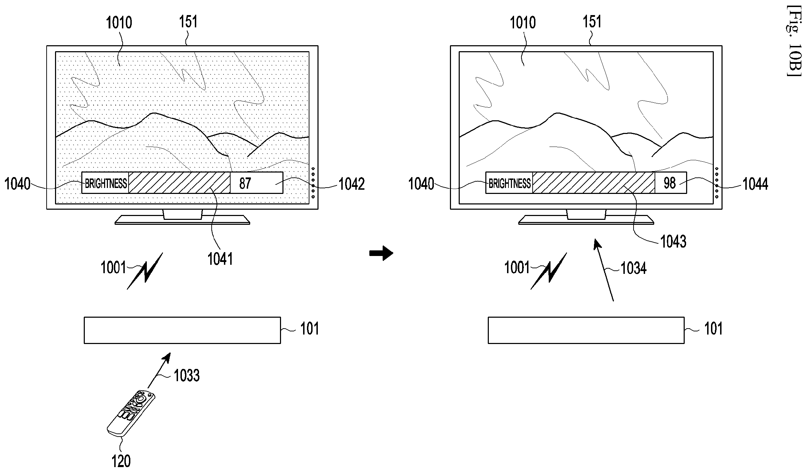

FIGs. 9A and 9B illustrate a method for operating a wireless power transmitter according to an embodiment. The embodiment of FIG. 9A is described in further detail with reference to FIGs. 10A and 10B, which illustrate a state of an electronic device according to an embodiment.

Referring to FIG. 9A, the wireless power transmitter 100 may transmit a first magnitude of power in step 901. In step 903, the wireless power transmitter 100 may periodically or aperiodically receive the current state of the electronic device 150. In step 905, the wireless power transmitter 100 may receive a control signal from the control device 120. In step 907, the wireless power transmitter 100 may determine a state change of the electronic device 150 to be made by applying the control signal, based on the current state of the electronic device 150. In step 909, the wireless power transmitter 100 may determine the power consumption of the electronic device 150 corresponding to the state change to be made. In step 911, the wireless power transmitter 100 may increase or maintain the magnitude of transmit power, corresponding to the determined power consumption. In step 913, the wireless power transmitter 100 may transmit, to the electronic device 150, a control signal or an operation performing command corresponding to the control signal. For example, when the control device 120 transmits a control signal corresponding to an "increase screen brightness + 1," the wireless power transmitter 100 may analyze the corresponding control signal and determine the operation performing command, "increase screen brightness by one," as per a result of the analysis. However, when the control device 120 includes a plurality of hardware buttons in the manner of a remote controller, the wireless power transmitter 100 may receive a control signal corresponding to a "right shift key pressed," in which case the wireless power transmitter 100 may apply the control signal based on the current state of the electronic device 150, thereby determining at least one of an operation to be performed, a predicted state, or a predicted power consumption.

For example, as shown in FIG. 10A, the TV 151, an example of the electronic device 150, may receive a first magnitude of first power 1001 from the set-top box 101, an example of the wireless power transmitter 100. The TV 151 may display the first screen 1010 at a first brightness using the first power 1001, may receive media data from the set-top box 101 and display the first screen 1010 using the media data, may receive a menu screen invoking screen while displaying the first screen 101, and corresponding thereto, may display a menu screen 1020 including a color tab 1021, a brightness tab 1022, a mode tab 1023, or other various tabs.

The electronic device 150 may display an indicator to be positioned on at least one tab of the menu screen 1020 according to a command to move the indicator on the menu screen. For example, as shown in FIG. 10A, the electronic device 150 may display the indicator to be positioned on the brightness tab 1022, and may transmit, to the set-top box 101, information about the current state in which, while displaying the first screen 1010, the indicator is displayed on one tab, such as the brightness tab 1022 of the menu screen 1020 by entry into the display of the menu screen 1020.

For example, the electronic device 150 and the wireless power transmitter 100 may store correlation information about information about various states of the electronic device 150 and information about predicted states that will occur according to the type of control signals. Table 4 below represents examples of information about the correlations among state information, control signals, predicted state information, and power consumptions according to an embodiment.

**[Table 4]**

| Current state | Control signal | Predicted state | Power consumption |
|---|---|---|---|
| state of indicating brightness tab among menu entry states | Left button pressed | state of indicating mode tab among menu entry states | a watts |
| state of indicating brightness tab among menu entry states | Right button pressed | state of indicating color tab among menu entry states | a watts |
| brightness tab entry state among menu entry states | Right button pressed | increase current brightness by one | Δb watts |
| indicating first mode in mode tab entry state among menu entry states | Right button pressed | indicating second mode in mode tab entry state among menu entry states | c watts |

For example, the electronic device 150 may be set to enter from one current state, such as the state of indicating the brightness tab among the menu entry states, to a predicted state indicating the mode tab or the color tab among the menu entry states, differing according to the type of the control signal, such as "right button pressed" or "left button pressed". Despite different predicted states, the same power consumption may be required for the predicted states of the electronic device 150. In this case, although a state change is predicted to be made by the control signal, the wireless power transmitter 100 may control the electronic device 150 to perform the operation contained in the control signal without changing the magnitude of transmit power from a watts.

Power consumption may be represented as an increment or decrement, such as + Δb watts, relative to the current state. In this case, the wireless power transmitter 100 may increase the magnitude of transmit power by the increment in the power consumption or by the sum of an offset and the increment or decrement in the power consumption considering the wireless power transmission efficiency or hardware efficiency and may then control the electronic device 150 to perform the operation contained in the control signal. For example, where the power consumption in the predicted state increases to c watts which is greater than a watts, the wireless power transmitter 100 may increase the magnitude of power corresponding to the magnitude of the power consumption and may then control the electronic device 150 to perform the operation contained in the control signal.

In FIG. 10A, the "right button pressed" control signal 1031 may be received by the set-top box 101, which may apply the "right button pressed" control signal 1031 to the current state, i.e., the state of indicating the brightness tab 1022 among the menu entry states," determining that the predicted state is the state of indicating the color tab 1021 among the menu entry states. The set-top box 101 may identify no change in the power consumption, thus able to transmit an operation performing command 1032 to the TV 151 while maintaining transmitting the first magnitude of power 1001. The TV 151 may display the indicator on the color tab 1021 of the menu screen 1020 as per the received operation performing command 1032.

In FIG. 10B, the state of the TV 11 may be the "brightness tab entry state among the menu entry states," and a brightness control user interface (UI) 1040 may be displayed and may include a brightness degree indicating bar 1041 and a brightness degree number 1042. The TV 151 may report its current state to the set-top box 101, which may receive a "right button pressed" control signal 1033 from the control device 120, may apply the control signal to the current state of the electronic device, thereby identifying the "increase current brightness by one" predicted state, may identify that the predicted state further requires as much power consumption as Δb watts as compared with the current state, and may increase the magnitude of power 1002 corresponding to the increment in power consumption. After increasing the magnitude of power 1002, the set-top box 101 may send an operation performing command 1034 to the TV 151, which may control the screen brightness corresponding to the received operation performing command 1034 and display the brightness degree indicating bar 1043 and brightness degree number 1044 corresponding to the controlled brightness. The TV 151 may display the current state or output the current state to various output means, such as a light emitting diode (LED), voice, or vibration.

FIG. 9B illustrates a method for operating a wireless power transmitter according to an embodiment.

The wireless power transmitter 100 may transmit a first magnitude of power in step 931, and may periodically or aperiodically receive the current state and receive power-related information about the electronic device 150 in step 933. The receive power-related information may be related to the magnitude of power received by the electronic device 150, e.g., the magnitude of at least one voltage, current, or power at, at least, one of the input terminal or output terminal of at least one hardware device included in the power receiving circuit of the electronic device 150.

In step 935, the wireless power transmitter 100 may receive a control signal from the control device 120. In step 937, the wireless power transmitter 100 may determine a state change of the electronic device 150 to be made by applying the control signal, based on the current state of the electronic device 100. In step 939, the wireless power transmitter 100 may determine the magnitude of power to be transmitted or the degree of adjustment of the magnitude of power corresponding to the received power-related information and the predicted state change. In step 941, the wireless power transmitter 100 may adjust the magnitude of transmit power, according to a result of the determination.

The wireless power transmitter 100 may determine an increment in power consumption of the electronic device 150 or predicted power consumption in the electronic device 150 as per the correlation information as set forth in Table 4, and the wireless power transmitter 100 may adjust the transmit power by a magnitude greater than the increment in the predicted power consumption considering the magnitude of power that the electronic device 150 is currently receiving. In step 943, the wireless power transmitter 100 may transmit, to the electronic device 150, a control signal or an operation performing command corresponding to the control signal.

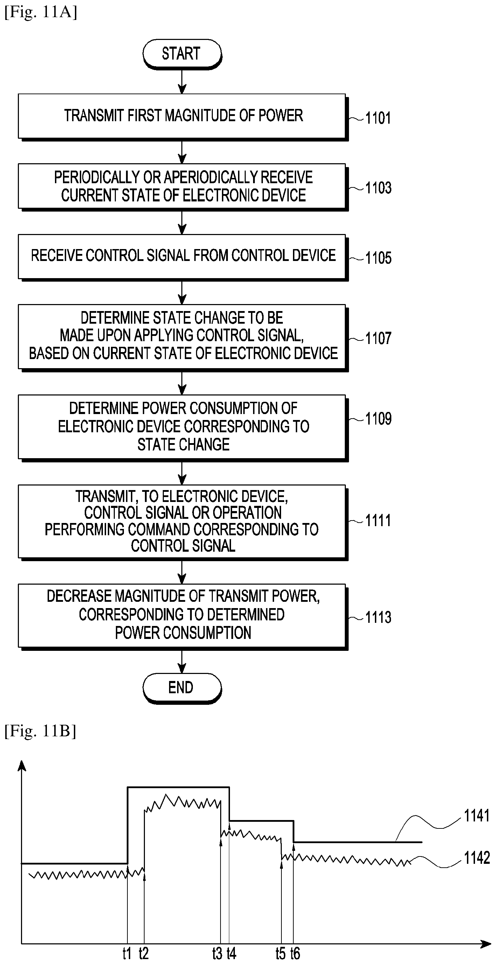

FIG. 11A illustrates a method for operating a wireless power transmitter according to an embodiment.

The wireless power transmitter 100 may transmit a first magnitude of power in step 1101. In step 1103, the wireless power transmitter 100 may periodically or aperiodically receive the current state of the electronic device 150. In step 1105, the wireless power transmitter 100 may receive a control signal from the control device 120. In step 1107, the wireless power transmitter 100 may determine a state change of the electronic device 150 to be made by applying the control signal, based on the current state of the electronic device. In step 1109, the wireless power transmitter 100 may determine the power consumption of the electronic device 150 corresponding to the state change to be made. For example, the wireless power transmitter 100 may determine to reduce the magnitude of power to be transmitted. In step 1111, the wireless power transmitter 100 may transmit, to the electronic device 150, a control signal or an operation performing command corresponding to the control signal. In step 1113, the wireless power transmitter 100 may decrease the magnitude of transmit power, corresponding to the determined power consumption. As set forth above, the electronic device 150 may receive a sufficient magnitude of power before performing a particular operation and may reduce the magnitude of power that it receives, upon performing the particular operation.

FIG. 11B is a graph illustrating power received and power consumed by an electronic device according to an embodiment.

In FIG. 11B, the electronic device 150 may receive power 1141 that varies in magnitude over time. The electronic device 150 may consume the power 1142. The wireless power transmitter 100 may increase the magnitude of transmit power at a first time t1 as a state change is predicted for the electronic device 150 from a first state to a second state. The power 1141 that the electronic device 150 receives may be increased at the first time t1, after which time the wireless power transmitter 100 may send a first operation performing command to the electronic device 150, which may enter into the second state as it performs a first operation at a second time t2. According to entry into the second state, the power consumption 1142 may also increase at the second time t2.

The wireless power transmitter 100 may predict a state change in the electronic device 150 from the second state to a third state, in which the power consumption of the electronic device 150 may be less than the existing power consumption. In this case, the wireless power transmitter 100 may first transmit a second operation performing command at a third time t3 and may then reduce the magnitude of transmit power at a fourth time t4. At a fifth time t5 and a sixth time t5, the wireless power transmitter 100 may send an operation performing command and then reduce the magnitude of power if the power consumption is predicted to reduce. Upon determining the magnitude of power to be received by the electronic device 150, the electronic device 150 may reduce the power consumption and then send a request for reducing the magnitude of power, or the electronic device 150 may send a request for increasing the magnitude of power and then increase power consumption.

When the electronic device 150 controls the magnitude of power transmitted from the wireless power transmitter 100, the electronic device 150 may predict a reduction in power consumption due to a shift to the predicted state, and after shifting to the predicted state, may send a communication signal for reducing power consumption to the wireless power transmitter 100.

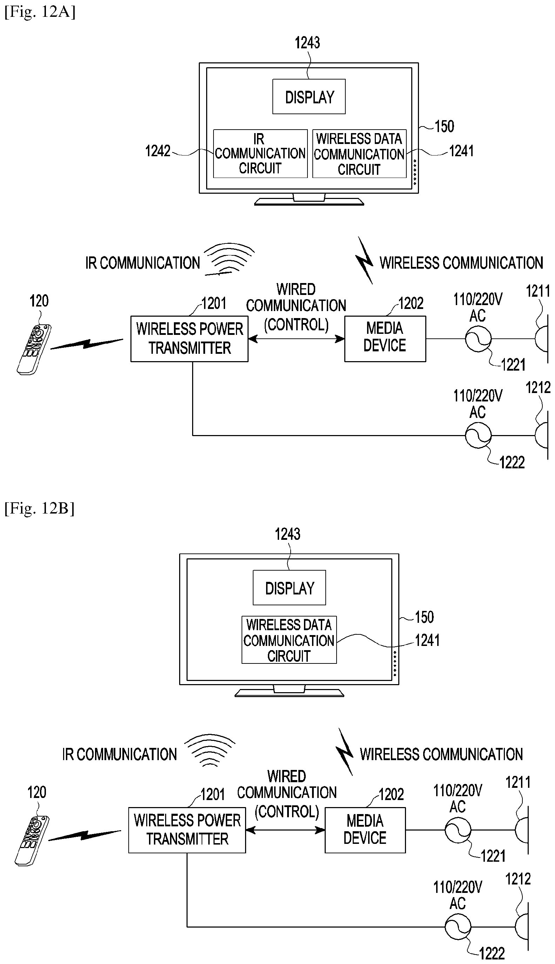

FIGs. 12A and 12B illustrate a relationship between a wireless power transmitter and a set-top box according to an embodiment.

Referring to FIG. 12A, a wireless power transmitter 1201 and a media device 1202 may wiredly or wirelessly communicate with each other. The media device 1202 may wirelessly transmit media data to the electronic device 150, and may be operated using wired power 1221 from a power source 1211. The electronic device 150 may receive the media data through a wireless data communication circuit 1241 and display the media data on a display 1243. The wireless power transmitter 1201 may wirelessly transmit power to the electronic device 150 using the wired power 1222 from the power source 1212, and may receive a control signal thorugh IR communication from the control device 120 and transmit an operation performing command corresponding to the control signal to an IR communication circuit 1242 of the electronic device 150 through IR communication.

As set forth above, the wireless power transmitter 1201 may adjust the magnitude of transmit power as per the operation contained in the control signal, such as based on operation power consumption-related information received from the media device 1202. The electronic device 150 may also receive the control signal through the IR communication circuit 1242 from the control device 120, in which case the control signal from the control device 120 may be neglected or delayed for its processing. The control signal may contain identification information about the transmitter, and the electronic device 150 may be operated corresponding to the control signal from the wireless power transmitter 1201.

The wireless power transmitter 1201 may include a key value in the control signal, and the electronic device 150 may be set to operate only on the control signal containing the key value. The control signal from the control device 120 may be modulated by a first modulation scheme, and the wireless power transmitter 1201 may demodulate the control signal, which has been modulated by the first modulation scheme, and modulate the control signal by a second modulation scheme and send the modulated control signal to the electronic device 150. In this case, the electronic device 150 may be set to process only control signals of the second modulation scheme.

In the embodiment of FIG. 12B, the electronic device 150 may not include the IR communication circuit 1242. In this case, the wireless power transmitter 1201 may transmit an operation performing command corresponding to the control signal to the media device 1202, or the media device 1202 may transmit an operation performing command to a wireless data communication circuit 1241. After adjusting the magnitude of power, the wireless power transmitter 1201 may deliver the operation performing command to the wireless data communication circuit 1241. The wireless power transmitter 1201 and the media device 1202 set forth in FIGs. 12A and 12B may be implemented in a single housing.

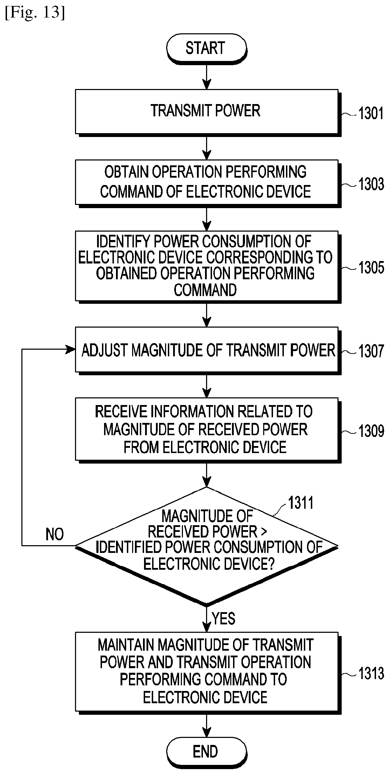

FIG. 13 illustrates a method for operating a wireless power transmitter according to an embodiment.

The wireless power transmitter 100 may transmit power in step 1301, and may obtain a command for performing the operation of the electronic device 150 in step 1303. In step 1305, the wireless power transmitter 100 may identify the power consumption of the electronic device 150 corresponding to the obtained operation performing command, and in step 1307, may adjust the magnitude of transmit power. In step 1309, the wireless power transmitter 100 may receive, through the communication circuit, e.g., information about the magnitude of voltage, current, or power at the output terminal of the coil or patch antenna or at the output terminal of the rectifying circuit of the electronic device 150. In step 1311, the wireless power transmitter 100 may determine whether the magnitude of power received by the electronic device 150 exceeds the identified magnitude of power consumption of the electronic device 150 based on the received information. Upon determining that the magnitude of power received by the electronic device 150 exceeds the identified power consumption of the electronic device 150, the wireless power transmitter 100 may maintain the magnitude of transmit power and send an operation performing command to the electronic device 150 in step 1313.

Upon determining that the magnitude of power received by the electronic device 150 is less than or equal to the identified power consumption of the electronic device 150, the wireless power transmitter 100 may re-adjust the magnitude of transmit power. As set forth above, the wireless power transmitter 100 may increase the power until the electronic device 150 receives power greater than the power consumption and may then send an operation performing command. For example, where the operation performing command or the electronic device 150 is of such a type as not to require an immediate response, the wireless power transmitter 100 may identify the magnitude of power received by the electronic device 150 and adjust the power corresponding thereto as shown in FIG. 13. Alternatively, the electronic device 150 may send a request for increasing the magnitude of power, and the wireless power transmitter 100 may increase the magnitude of transmit power until no further request is received and may then send an operation performing command to the electronic device 150.

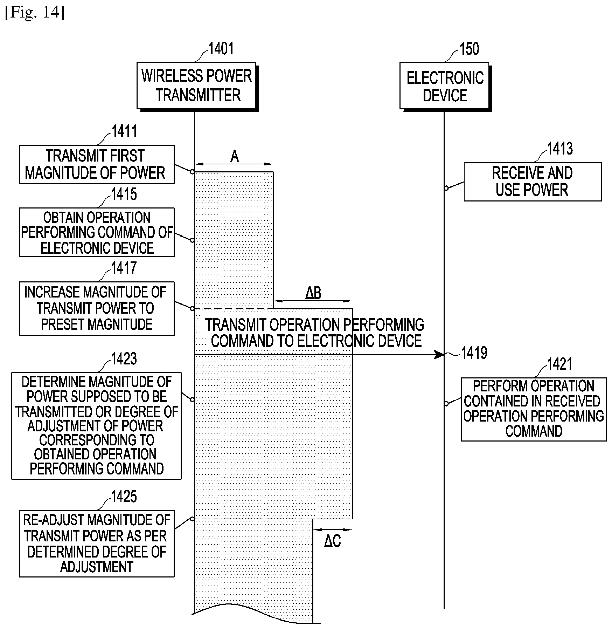

FIG. 14 illustrates operations of a wireless power transmitter and an electronic device according to an embodiment.

The wireless power transmitter 100 may transmit power 1401 of a first magnitude A in step 1411. In step 1413, the electronic device 150 may receive and use the power 1401 of the first magnitude A. The wireless power transmitter 100 may obtain a command for performing the operation of the electronic device 150 in step 1415. In step 1417, the wireless power transmitter 100 may increase the magnitude of transmit power 100 to a preset magnitude (A+ΔB). The wireless power transmitter 100 may increase the magnitude of transmit power 1403 to a preset magnitude regardless of operation performing commands.

In step 1419, the wireless power transmitter 100 may transmit the operation performing command to the electronic device 150. As the transmit power 1403 immediately increases without magnitude calculation and the operation performing command is then transmitted, the electronic device 150 may perform the operation within a reduced time. In step 1421, the electronic device 150 may perform an operation contained in the received operation performing command. The wireless power transmitter 100 may determine the degree of adjusting power corresponding to the obtained operation performing command or the magnitude of power to be transmitted in step 1423. For example, the wireless power transmitter 100 may determine the magnitude of power required for maintaining the state of the electronic device 150 by an operation performing command as per various schemes set forth above. In step 1425, the wireless power transmitter 100 may re-adjust the magnitude (A+ΔB-ΔC) of transmit power 1405 according to the determined adjustment degree, which may decrease the time taken for the electronic device 150 to perform the operation and enable a later readjustment to the power magnitude required to maintain the state, thus preventing a waste of power.

As described above, when no immediate response is required, the wireless power transmitter 100 may adjust the magnitude of power as per a stability-maximized scheme as shown in FIG. 13, or may adjust the magnitude of power as per a scheme capable of maximally shortening time when an immediate response is otherwise required, as shown in FIG. 14.

The wireless power transmitter 100 may select any one of various schemes disclosed herein, depending on the type of the electronic device 150 receiving power, and may thus adjust the magnitude of power depending on different schemes and the type of the electronic device receiving power. Alternatively, the wireless power transmitter 100 may select any one of various schemes disclosed herein, depending on the function (or operation) of the electronic device 150 receiving power, and may thus adjust the magnitude of power depending on different schemes and the function of the electronic device receiving power.

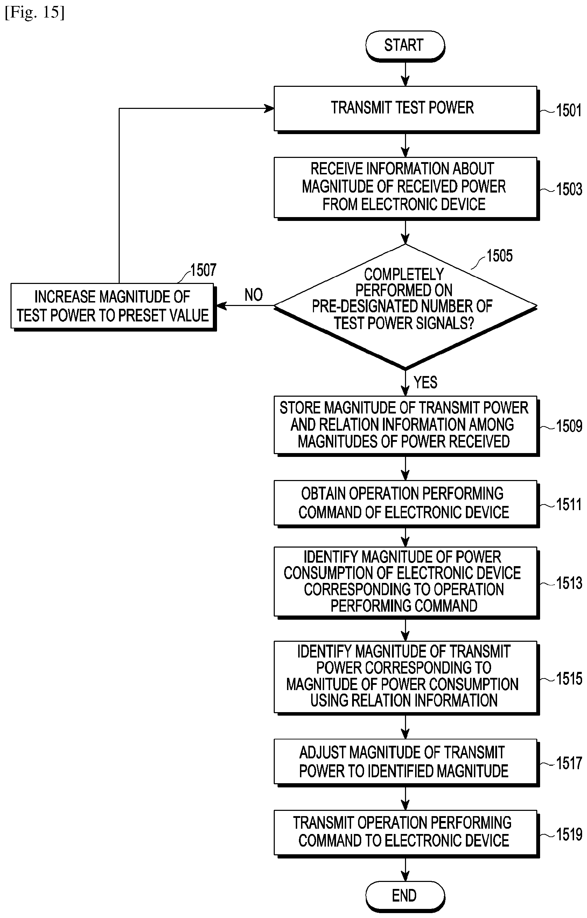

FIG. 15 illustrates a method for operating a wireless power transmitter according to an embodiment.

The wireless power transmitter 100 may transmit test power in step 1501, and may receive information about the magnitude of receive power from the electronic device 150 in step 1503. For example, the wireless power transmitter 100 may receive, through the communication circuit, information about the magnitude of at least one of voltage, current, or power at the input terminal or output terminal of the rectifying circuit of the electronic device 150. In step 1505, the wireless power transmitter 100 may determine whether steps 1501 and 1503 for every designated number of test power signals are competed. Unless the execution is complete on the test power signals, the wireless power transmitter 100 may increase the magnitude of the test power to a preset value in step 1507.

The wireless power transmitter 100 may receive, from the electronic device 150, information about the magnitude of receive power after the magnitude has been increased, and may thus identify the magnitude of receive power for the plurality of magnitudes of test power. In step 1509, when the execution on the test power signals is not complete, the wireless power transmitter 100 may store information about the relation between the magnitude of transmit power and receive power. The magnitude of power received by the electronic device 150 may be varied depending on the distance between the wireless power transmitter 100 and the electronic device 150 receiving power or the magnitude of power transmitted from the wireless power transmitter 100 according to the installation environment. After the first installation of the electronic device 150, the wireless power transmitter 100 may previously identify and store information about the magnitude of receive power as per the plurality of test power signals through a calibration process.

Table 5 below represents an example of information about the relation between the transmit power and the power received by the electronic device 150 according to an embodiment.

**[Table 5]**

| Magnitude of power applied to coil of wireless power transmitter 100 | Magnitude of power at output terminal of rectifying circuit of electronic device 150 |
|---|---|
| 60W | 40W |
| 70W | 45W |
| 80W | 48W |
| 90W | 50W |

The wireless power transmitter 100 may obtain a command for performing the operation of the electronic device 150 in step 1511, and may identify the magnitude of power consumption of the electronic device 150 corresponding to the obtained operation performing command in step 1513. For example, the wireless power transmitter 100 may receive power consumption information as set forth in Table 3 from the electronic device 150 and store the power consumption information and identify the magnitude of power consumption corresponding to the operation by referring to the power consumption information.

In step 1515, the wireless power transmitter 100 may identify the magnitude of transmit power corresponding to the magnitude of power consumption using the relation information. For example, while transmitting a power of 70W, the wireless power transmitter 100 may obtain an operation performing command to increase the screen brightness from a current second brightness to a third brightness. The wireless power transmitter 100 may determine that a power consumption of 5W is further required to increase the brightness from the second brightness to a third brightness using the power consumption information as set forth in Table 3.

Using Table 5, the wireless power transmitter 100 may identify that the magnitude of power should be increased from currently 70W to 90W to increase the magnitude of power received by the electronic device 150 by 5W, i.e. from 45W to 50W. In step 1517, the wireless power transmitter 100 may adjust the magnitude of transmit power to the identified magnitude, such as by increasing the magnitude of power to 90W. In step 1519, the wireless power transmitter 100 may transmit an operation performing command to the electronic device 150.

As set forth above, the transmission/reception efficiency may drastically vary depending on the relative location relationship between the wireless power transmitter 100 and the electronic device 150 and the deployment of other ambient electronic devices. The wireless power transmitter 100 may transmit power in a more stable manner by previously procuring the relation information as set forth in Table 5 through calibration, and may periodically or aperiodically perform calibration, and thus may update and manage the relation information as shown in Table 5.

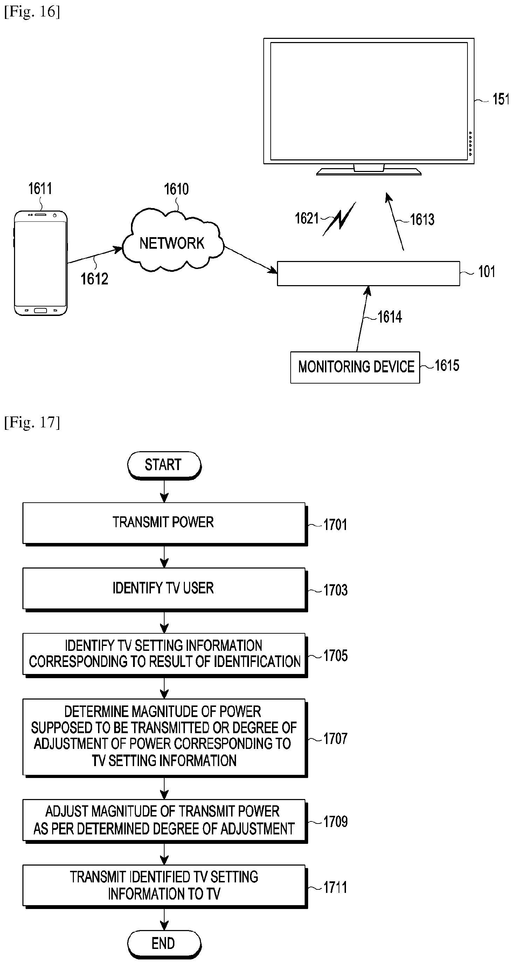

FIG. 16 illustrates a process for controlling an electronic device using a remote electronic device according to an embodiment.

As shown in FIG. 16, the set-top box 101 may connect to a network 1610 for wireless communication. The set-top box 101 may include an IR receiving circuit for receiving control signals from the control device 120 and a short-range communication circuit, such as a BLE communication circuit, for transmitting media data or operation performing commands to the TV 151. The set-top box 101 may further include a communication circuit capable of wiredly or wirelessly communicating with another electronic device 1611 through an IP-based network 1610. The other electronic device 1611 located in a remote site may transmit a control signal 1612, such as for an operation performing command to increase or decrease screen brightness, through the network 1610 to the set-top box 101. Based on the control signal received through the network 1610, the set-top box 101 may increase power and then send an operation performing command 1613 to the TV 151 or may send the operation performing command 1613 to the TV 151 and then reduce power.

The monitoring device 1615 may identify the user in front of the TV 151 and send setting information 1614 including brightness, volume, or view mode set per user, to the set-top box 101. Based on the setting information 1614, the set-top box 101 may increase power and then send an operation performing command 1613 corresponding to the setting information 16 to the TV 151 or may send the operation performing command 1613 to the TV 151 and then reduce power.

FIG. 17 illustrates a method for controlling a wireless power transmitter according to an embodiment.

The wireless power transmitter 100 may transmit power in step 1701. In step 1703, the wireless power transmitter 100 may identify a TV user. For example, the wireless power transmitter 100 may include a camera capable of capturing the external environment and may identify the user using a result of capturing by the user. The TV may include a camera. The wireless power transmitter 100 may receive a result of identifying the user by the TV or may receive an image from the TV to identify the user using the image. Alternatively, the wireless power transmitter 100 or the TV may include various devices for user authentication and identify the user using user authentication information. Identifying the user by the wireless power transmitter 100 is not limited to a particular method. In step 1705, the wireless power transmitter 100 may identify TV setting information corresponding to the result of the identification. For example, the wireless power transmitter 100 may previously store per-user TV setting information as set forth in Table 6 below.

**[Table 6]**

| | Brightness | Volume | Mode |
|---|---|---|---|
| User1 | 34 | 27 | Movie mode |
| User2 | 78 | 22 | Movie mode |
| User3 | 95 | 65 | Sports mode |

The above-described per-user setting information may be set by the user. Alternatively, the wireless power transmitter 100 may determine the setting information based on various types of additional information such as the user's age, gender, or type of program viewed. Another electronic device may determine the setting information, and the wireless power transmitter 100 may receive the setting information from the other electronic device.

In step 1707, the wireless power transmitter 100 may determine the magnitude of power to be transmitted or the degree of adjustment of the magnitude of power corresponding to the TV setting information. In step 1709, the wireless power transmitter 100 may increase the magnitude of transmit power depending on the determined degree of adjustment. In step 1711, the wireless power transmitter 100 may send the identified TV setting information to the TV. When the magnitude of power is determined to reduce, the wireless power transmitter 100 may send the TV setting information to the TV and then reduce the magnitude of transmit power. Preset backlight values may be designated per manufacturer and as per various modes, such as standard mode, clear mode, optimal mode, and movie mode, and information about the magnitude of power consumption per mode may be previously stored in at least one of the wireless power transmitter 100 or the electronic device 150.

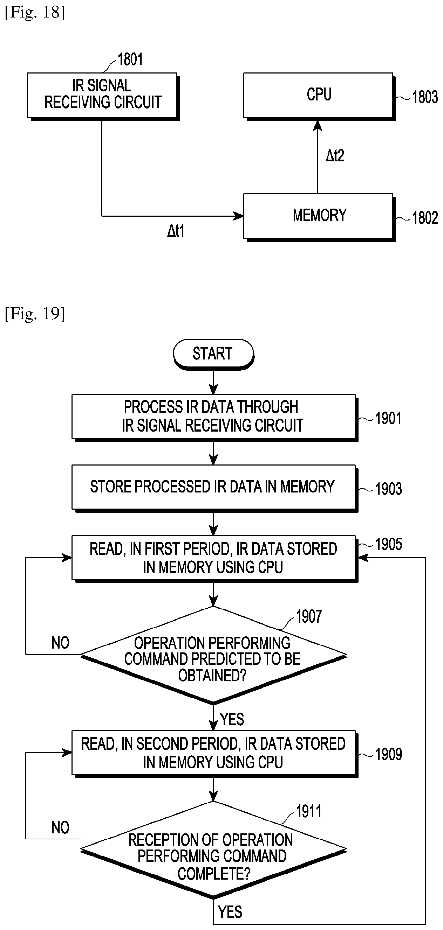

FIG. 18 illustrates a wireless power transmitter according to an embodiment.

Referring to FIG. 18, a wireless power transmitter 100 may include an IR signal receiving circuit 1801, a memory 1802, and a CPU 1803. The IR signal receiving circuit 1801 may receive IR signals from a control device, such as a remote controller, which IR signals may be stored in the memory 1802 at first time intervals Δt1. The CPU 1803 may read and process information about the IR signals stored in the memory 1802 at second time intervals Δt2. As the second time interval Δt2 increases, the control signal processing time of the wireless power transmitter 100 may increase, and as the second time interval Δt2 reduces, the control signal processing time of the wireless power transmitter 100 may decrease but other tasks for execution by the CPU 1803 may be delayed, causing device overheating. The wireless power transmitter 100 may previously predict the reception of control signals, in which case the wireless power transmitter 100 may reduce the interval for reading the IR signals stored in the memory 1802.

For example, the control device 120 may include a gyro sensor or linear sensor capable of sensing motion, and when detecting a motion, the control device 120 may send information about the motion to the wireless power transmitter 100. Upon detecting a motion of the control device 120, the wireless power transmitter 100 may reduce the interval for reading the information about the IR signals stored in the memory 1802. Upon detecting the user's sitting in front of the TV, the wireless power transmitter 100 may reduce the interval for reading the information about the IR signals stored in the memory 1802. Corresponding to the first reception of a control signal, the wireless power transmitter 100 may reduce the interval for reading the information about the IR signals stored in the memory 1802. Unless a control signal is received in excess of a preset threshold time, the wireless power transmitter 100 may increase the interval for reading the information about the IR signals stored in the memory 1802.

FIG. 19 illustrates a method for operating a wireless power transmitter according to an embodiment.

The wireless power transmitter 100 may process IR data through an IR signal receiving circuit in step 1901. In step 1903, the wireless power transmitter 100 may store the processed IR data in the memory. In step 1905, the wireless power transmitter 100 may read the IR data stored in the memory in a first period using the CPU. The first period may be set to enable the CPU to perform other tasks while suppressing the CPU from overheating. In step 1907, the wireless power transmitter 100 may determine whether an obtaining of an operation performing command is predicted as per various schemes set forth above.

In step 1909, when it is determined that obtaining an operation performing command is predicted, the wireless power transmitter 100 may read the IR data stored in the memory in a second period using the CPU. The second period may be shorter than the first period and may be set to maximize the processing speed of control signals. When it is determined that obtaining an operation performing command is not predicted, the method returns to step 1905. In step 1911, the wireless power transmitter 100 may determine whether the reception of the operation performing command is complete, and when the reception of the operation performing command is complete, the wireless power transmitter 100 may return to step 1905 and read the IR data stored in the memory in the first period. As set forth above, the IR data processing time which takes up a significant part of the overall processing time may be reduced. When the reception of the operation performing command is incomplete, the method returns to step 1909. The method of FIG. 19 may continue when the wireless power transmitter 100 turns on or may stop as it turns off.

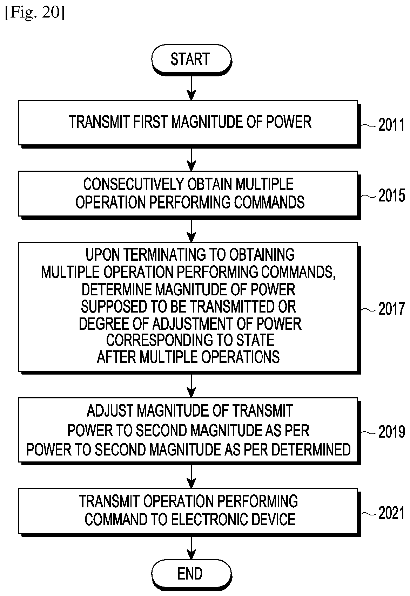

FIG. 20 illustrates a method for operating a wireless power transmitter according to an embodiment.

The wireless power transmitter 100 transmits a first magnitude of power in step 2011. In step 2015, the wireless power transmitter 100 may consecutively obtain a plurality of operation performing commands. For example, the user may consecutively press a volume-up button of the control device, e.g., a remote controller, and the control device may send volume-up control signals to the wireless power transmitter 100 over multiple times. In step 2017, when obtaining the plurality of operation performing commands is completed, the wireless power transmitter 100 may determine the degree of adjustment of power corresponding to the state after the plurality of operations or the magnitude of power to be transmitted. Upon failing to receive another operation performing command within a preset threshold time, the wireless power transmitter 100 may determine that the obtaining of a power consumption has terminated. In step 2019, the wireless power transmitter 100 increases the magnitude of transmit power to the second magnitude depending on the determined degree of adjustment. For example, when five volume-up operation performing commands are received, the wireless power transmitter 100 may adjust the magnitude of transmit power, corresponding to the 5-degree volume increase.

In step 2021, when increasing of the magnitude of power is complete, the wireless power transmitter 100 may transmit an operation performing command to the electronic device 150. The wireless power transmitter 100 may send a single operation performing command, "increase volume by five degrees," to the electronic device 150, instead of the five operation performing commands. When a reduction in power is required, the wireless power transmitter 100 may send an operation performing command to the electronic device 150 and reduce the magnitude of transmit power corresponding to later multiple operation performing commands.

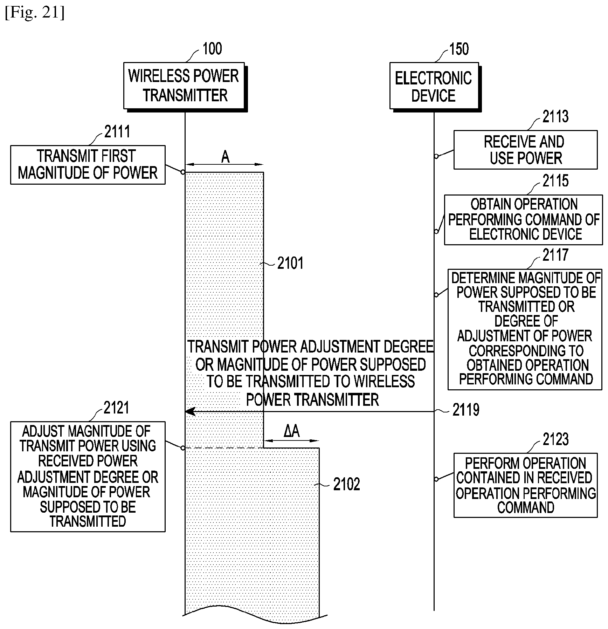

FIG. 21 illustrates a method for operating a wireless power transmitter and an electronic device according to an embodiment.

A wireless power transmitter 100 transmits power 2101 of a first magnitude A in step 2111. In step 2113, the electronic device 150 receives and uses the power 2101. The electronic device 150 may obtain a command for performing the operation of the electronic device 150 in step 2115. For example, the electronic device 150 may obtain the operation performing command through IR communication from the control device 120 or may obtain the operation performing command as per a scheme in which the wireless power transmitter 100 obtains an operation performing command as set forth above. The electronic device 150 obtains a state change command that enables the state of the electronic device 150 to change from a first state to another state. The operation performing command may also be named a state change command in that the state of the electronic device is changed as a particular operation is performed by the operation performing command.

The operation performing command or state change command may be received through a communication circuit, such as an IR receiving circuit or a bluetooth communication circuit or may be obtained by the above-described various recognition schemes such as voice recognition or motion recognition. The electronic device 150 may determine the degree of adjusting power corresponding to the obtained operation performing command or the magnitude of power to be transmitted from the wireless power transmitter 100 in step 2117, using the information about the relation between operation and power consumption as set forth in Table 3, by applying an offset to the power consumption. In step 2119, the electronic device 150 may send the degree of adjustment of power or the magnitude of power needing to be transmitted to the wireless power transmitter 100. In step 2121, the wireless power transmitter 100 adjusts the magnitude of transmit power 2102 to a magnitude (A+ΔA) using the received power adjustment degree or magnitude of power to be transmitted. In step 2123, the electronic device 150 may perform an operation contained in the received operation performing command after the magnitude of power 2102 received has been increased.

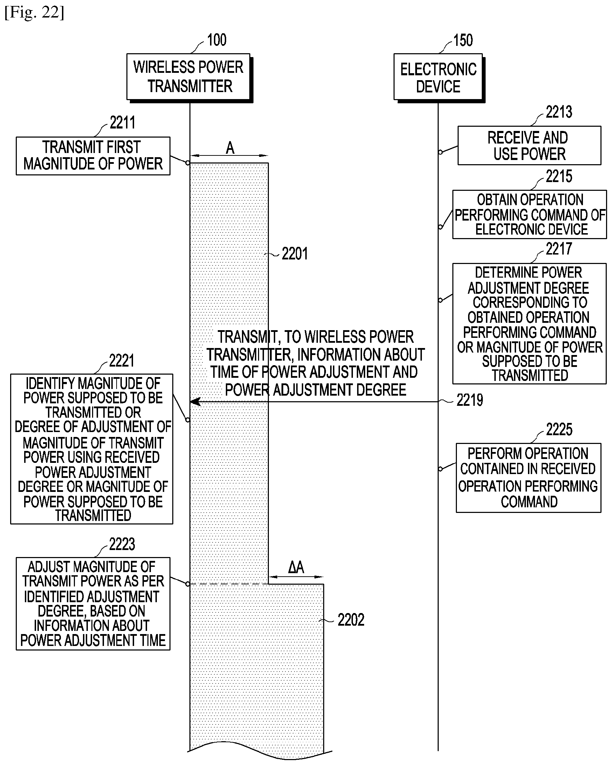

FIG. 22 illustrates a method for operating a wireless power transmitter and an electronic device according to an embodiment.

The wireless power transmitter 100 transmits power 2201 of a first magnitude A in step 2211. In step 2213, the wireless power transmitter 100 receives and uses the power 2201. The electronic device 150 may obtain a command for performing the operation of the electronic device 150 in step 2215. The electronic device 150 may determine the degree of adjusting power corresponding to the obtained operation performing command or the magnitude of power to be transmitted in step 2217. In step 2219, the electronic device 150 may send information about the degree and time of adjustment of power to the wireless power transmitter 100.

For example, after the electronic device 150 previously synchronizes itself in time-sync with the wireless power transmitter 100, the electronic device 150 may designate a particular time and send a request for adjusting power. When the electronic device 150 fails to be in time-sync with the wireless power transmitter 100, the electronic device 150 may request the wireless power transmitter 100 to adjust power within a preset time after the wireless power transmitter 100 receives a communication signal. In step 2221, the wireless power transmitter 100 may identify the degree of adjustment of the magnitude of transmit power or the magnitude of power needing to be transmitted using the received degree of adjustment of power or magnitude of power needing to be transmitted. In step 2223, the wireless power transmitter 100 adjusts the magnitude (A+ΔA) of transmit power 2202 according to the identified adjustment degree and based on the information about the time of power adjustment. In step 2225, the electronic device 150 may perform an operation contained in the received operation performing command, after the power adjustment time requested. The electronic device 150 may also be set to perform the operation corresponding to the time of power adjustment only upon receiving an acknowledgment (ACK) signal from the wireless power transmitter 100 on the information about the degree of power adjustment and the time of power adjustment.

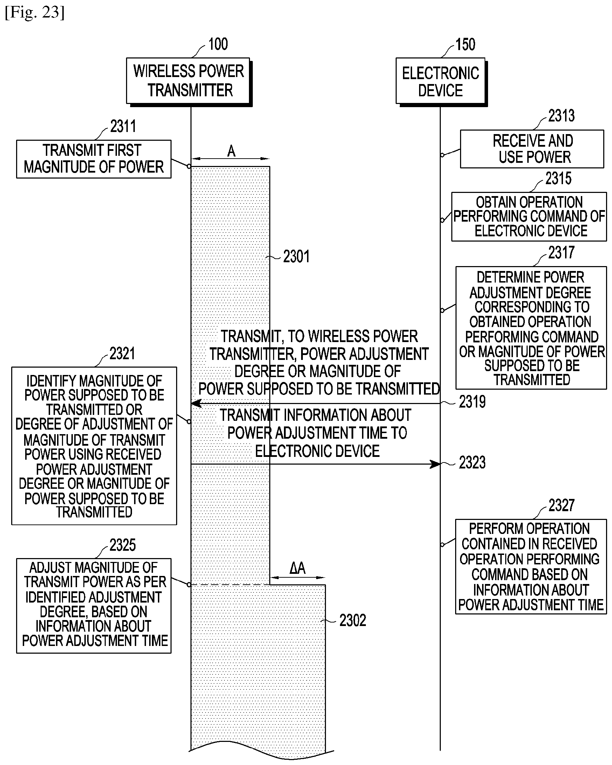

FIG. 23 illustrates a method for operating a wireless power transmitter and an electronic device according to an embodiment.

The wireless power transmitter 100 transmits power 2301 of a first magnitude A in step 2311. In step 2313, the wireless power transmitter 100 receives and uses the power 2301. The electronic device 150 may obtain a command for performing the operation of the electronic device 150 in step 2315, and may determine the degree of adjusting power corresponding to the obtained operation performing command or the magnitude of power to be transmitted in step 2317. In step 2319, the electronic device 150 may send the degree of adjustment of power or the magnitude of power needing to be transmitted to the wireless power transmitter 100. In step 2321, the wireless power transmitter 100 may identify the degree of adjustment of the magnitude of transmit power or the magnitude of power needing to be transmitted using the received degree of adjustment of power or magnitude of power needing to be transmitted.

In step 2323, the wireless power transmitter 100 may transmit the information about the power adjustment time to the electronic device 150, and may transmit, to the electronic device 150, a control signal designating a particular time or containing a time calculated after the control signal is received. In step 2325, the wireless power transmitter 100 adjusts the magnitude (A+ΔA) of transmit power 2302 according to the identified adjustment degree and based on the information about the time of power adjustment. In step 2327, the electronic device 150 may perform the operation contained in the received operation performing command based on the information about the power adjustment time. Accordingly, the electronic device 150 may perform the operation contained in the operation performing command after the magnitude of power 2302 has been increased.

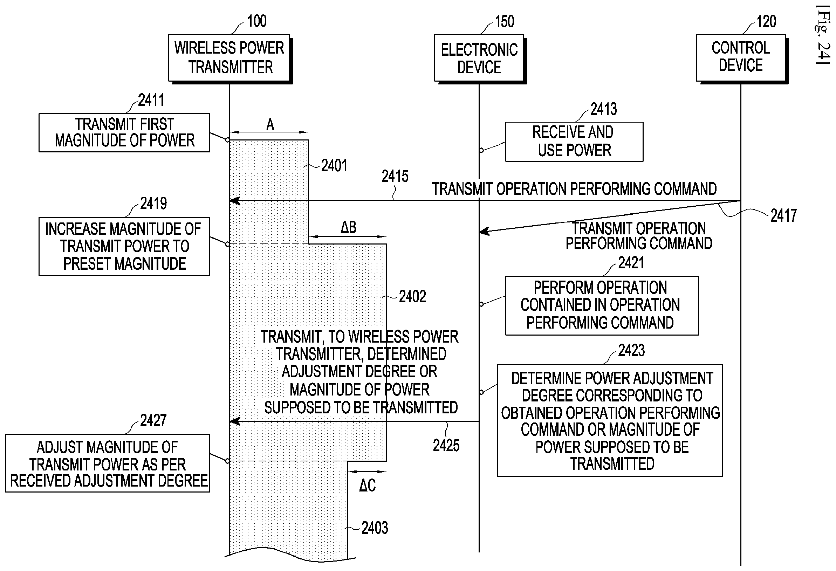

FIG. 24 illustrates a method for operating a wireless power transmitter, an electronic device, and a control device according to an example.

The wireless power transmitter 100 may transmit power 2401 of a first magnitude A in step 2411. In step 2413, the electronic device 150 may receive and uses the power 2401. In step 2415, the control device 120 may transmit an operation performing command to the wireless power transmitter 100. In step 2417, the control device 120 may transmit the operation performing command to the electronic device 150. In step 2419, the wireless power transmitter 100 may increase the magnitude of transmit power 2401 to a preset magnitude (A+ΔB), regardless of operation performing commands. In step 2421, the electronic device 150 may perform an operation contained in the operation performing command a preset time after the operation performing command has been received.

The electronic device 150 may determine the degree of adjusting power corresponding to the obtained operation performing command or the magnitude of power to be transmitted in step 2423. In step 2425, the electronic device 150 may send the determined adjustment degree or the magnitude of power to be transmitted to the wireless power transmitter 100. In step 2427, the wireless power transmitter 100 may adjust the magnitude (A+ΔB-ΔC) of transmit power 2405 according to the received adjustment degree, thereby decreasing the time taken for the electronic device 150 to perform the operation and enabling a later readjustment to the power magnitude required to maintain the state, thus preventing a waste of power.

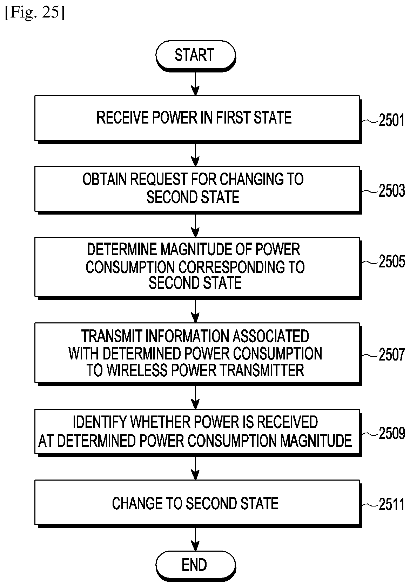

FIG. 25 illustrates a method for operating an electronic device according to an embodiment.

The electronic device 150 may receive power in a first state in step 2501. In step 2503, the electronic device 150 may determine whether to obtain a request for changing the state to a second state. In step 2505, the electronic device 150 may determine the magnitude of power consumption corresponding to the second state, such as by using the relation information as set forth in Table 3. In step 2507, the electronic device 150 may transmit the information associated with the determined power consumption to the wireless power transmitter 100, which may adjust the magnitude of transmit power using the received information associated with the power consumption. In step 2509, the electronic device 150 may identify whether power is received at the determined power consumption magnitude. Upon reaching the determined power consumption magnitude or more, the electronic device 150 may change to the second state in step 2511.

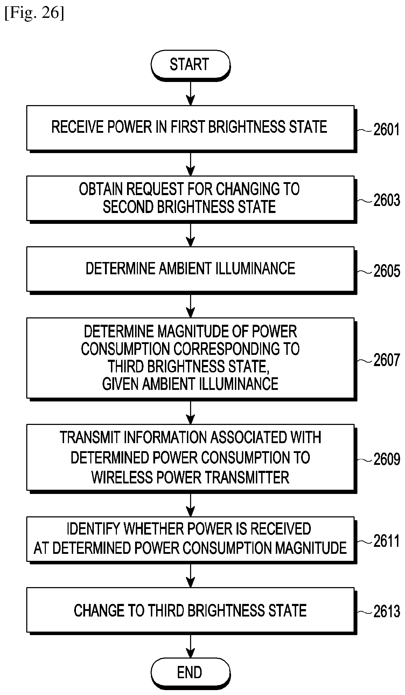

FIG. 26 illustrates a method for operating an electronic device according to an example.

The electronic device 150 may receive power in a first brightness state in step 2601. In step 2603, the electronic device 150 may obtain a request for changing to a second brightness state. In step 2605, the electronic device 150 may determine the ambient illuminance. In step 2607, the electronic device 150 may determine the magnitude of power consumption corresponding to a third brightness state considering the ambient illuminance. For example, when the ambient illuminance is relatively high, e.g. higher than a predetermined threshold, the electronic device 150 may choose a third brightness that is higher than the second brightness, and where the ambient illuminance is relatively low, e.g. , lower than or equal to a predetermined threshold, the electronic device 150 may choose a third brightness that is lower than the second brightness.

In step 2609, the electronic device 150 may transmit the information associated with the determined power consumption to the wireless power transmitter 100, which may adjust the magnitude of transmit power based on the received information associated with the power consumption. In step 2611, the electronic device 150 may identify whether power is received at the determined power consumption magnitude. Upon reaching the determined power consumption magnitude or more, the electronic device 150 may change to the third brightness state in step 2613. The electronic device 150 may determine the third brightness as per the user's view pattern, and may automatically adjust the brightness depending on the ambient illuminance, in which case the electronic device 150 may send a request for adjusting power to the wireless power transmitter 100 before automatically adjusting the brightness. The wireless power transmitter 100 or the electronic device 150 may obtain information about the ambient environment, and corresponding thereto, adjust the magnitude of transmit power.

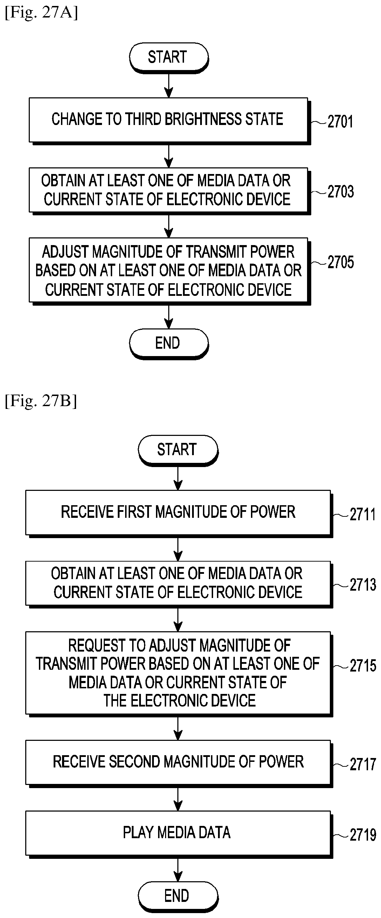

FIG. 27A illustrates a method for operating a wireless power transmitter according to an example.

The wireless power transmitter 100 may transmit a first magnitude of power in step 2701. In step 2703, the wireless power transmitter 100 may obtain at least one of media data or the current state of the electronic device. For example, after receiving media data from another electronic device, the wireless power transmitter 100 may wirelessly send the media data to the electronic device 150. For example, the wireless power transmitter 100 may receive the current state information or predicted state change information about the electronic device 150 from the electronic device 150. In step 2705, the wireless power transmitter 100 may adjust the magnitude of transmit power based on at least one of the media data or the current state of the electronic device. For example, the wireless power transmitter 100 may analyze the media data and predict the power consumption of the electronic device 150 based on a result of analyzing the media data, may predict a change in the power consumption of the electronic device 150 according to the result of analyzing the media data, and corresponding thereto, may adjust the magnitude of transmit power. The wireless power transmitter 100 may predict a change in the power consumption of the electronic device 150 according to the predicted state change information, and corresponding thereto, adjust the magnitude of the transmit power.

FIG. 27B illustrates a method for operating an electronic device to wirelessly receive power according to an example.

In FIG. 27B, the electronic device 150 may receive a first magnitude of power in step 2711, and may obtain at least one of media data or the current state of the electronic device in step 2713. For example, the electronic device 150 may may receive the media data from the wireless power transmitter 100 or another electronic device, and may determine the state information about the electronic device 150 or predicted state change information. In step 2715, the electronic device 150 may send a request for adjusting the magnitude of transmit power based on at least one of the media data or the current state of the electronic device 150.

For example, the electronic device 150 may analyze the media data and predict the power consumption of the electronic device 150 based on a result of analyzing the media data, may predict a change in the power consumption of the electronic device 150 according to the result of analyzing the media data, and corresponding thereto, send a request for adjusting the magnitude of transmit power. The electronic device 150 may predict a change in the power consumption of the electronic device 150 according to the predicted state change information, and corresponding thereto, send a request for adjusting the magnitude of transmit power. In step 2717, the electronic device 150 may receive a second magnitude of power which is different from the first magnitude of power. In step 2719, the electronic device 150 may play the media data using the magnitude-adjusted receive power.

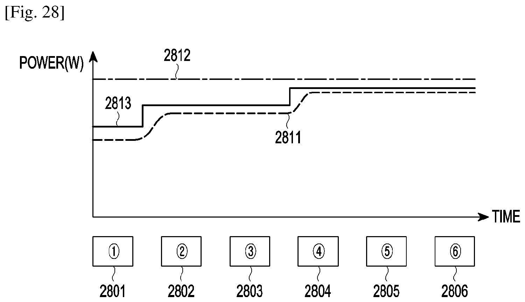

FIG. 28 illustrates a relationship between media data and power consumption according to an example.

In FIG. 28, media data may include a plurality of image frames 2801 to 2806, at least some of which may have different pixel values, resolutions, contrasts, or brightnesses, and accordingly, the power consumption 2811 when its corresponding image frame is displayed may be varied as the image frame is played. As an example, the electronic device 150 may receive a predetermined magnitude of power 2812 from the wireless power transmitter 100. In this case, although the electronic device 150 consumes relatively less power when displaying the first frame 2801 or the second frame 2802, the electronic device 150 receives a relatively large magnitude of power 2812, causing a waste of power. The electronic device 150 may receive power 2813 having a varied magnitude according to the power consumption of each image frame 2801 to 2806. For example, the electronic device 150 may predict a power consumption per image frame 2801 to 2806 and may thus send a request for adjusting the magnitude of transmit power to the wireless power transmitter 100, based on information associated with the change in power consumption received from the electronic device 150, preventing a waste of power. Alternatively, the wireless power transmitter 100 may directly predict the power consumption of the electronic device 150 per image frame 2801 to 2806, thus enabling adjustment of the magnitude of transmit power.

The electronic device 150 may predict the power consumption as per a lookup table regarding the relation between screen brightness and power consumption. Alternatively, the electronic device 150 may previously store an equation that uses the screen brightness variation degree and the power consumption variation degree as its variables and may predict the degree of variation in power consumption by entering a predicted screen brightness variation degree into the equation. The wireless power transmitter 100 or the electronic device 150 may perform control to adjust the magnitude of transmit power using power consumption-related data, such as volume-related information contained in the media data as well as the power consumption by the image frame.

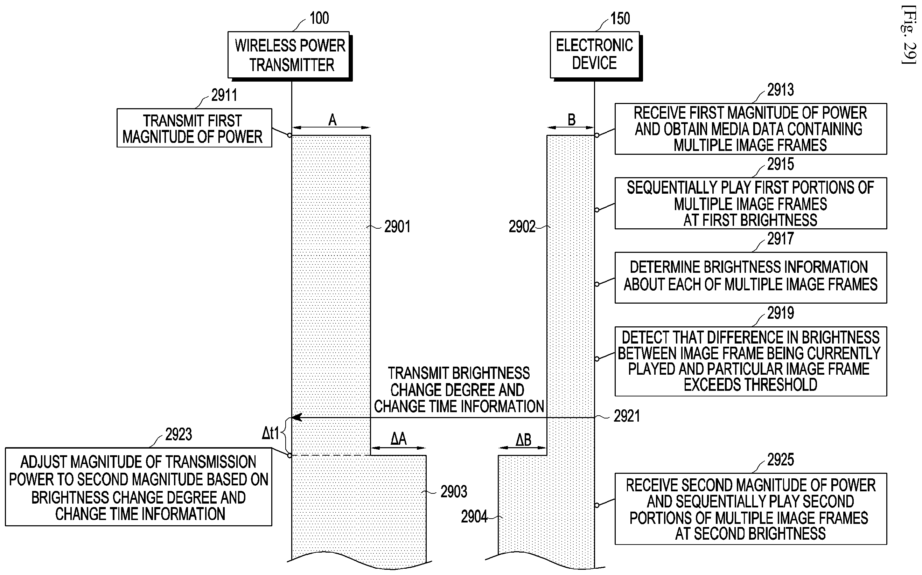

FIG. 29 illustrates a method for operating a wireless power transmitter and an electronic device according to an embodiment.

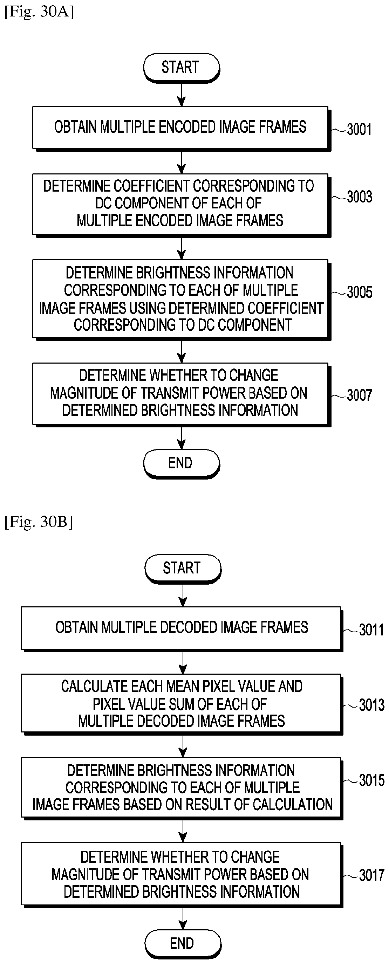

The wireless power transmitter 100 may transmit power 2901 of a first magnitude A in step 2911. In step 2913, the electronic device 150 may receive a third magnitude B of power 2902 and obtain media data containing a plurality of image frames. As set forth above, the third magnitude B may be less than the first magnitude A due to the dissipation of magnetic field. In step 2915, the electronic device 150 may sequentially play first portions of the plurality of image frames at a first brightness. The third magnitude B may be large enough to be able to display at the first brightness even given the efficiency of the plurality of hardware devices, such as the power receiving circuit, PMIC, or display in the electronic device 150 or the operation of other hardware. In step 2917, the electronic device 150 may determine brightness information about each of the plurality of image frames, which is described below in greater detail with reference to FIGs. 30A and 30B.

In step 2919, the electronic device 150 may detect that a difference in brightness between the image frame being currently played and a particular image frame exceeds a threshold. For example, where a first image frame which is currently being played has a first brightness, and a fifth image frame has a third brightness, the difference between the first brightness and the third brightness may be less than or equal to the threshold. In this case, the electronic device 150 may abstain from requesting to adjust the transmit power on the fifth image frame. For example, when an eighth image frame has a second brightness, the electronic device 150 may detect that the difference between the first brightness and the second brightness exceeds the threshold.

In step 2921, the electronic device 150 may send the information about the brightness change degree and change time to the wireless power transmitter 100. For example, the electronic device 150 may transmit, to the wireless power transmitter 100, information indicating that the brightness change degree is the difference between the first brightness and the second brightness, and the change time is the time between the first image frame and the eighth image frame. Alternatively, the electronic device 150 may determine the power consumption variation degree corresponding to the brightness change degree and send the information about the power consumption variation degree and change time to the wireless power transmitter 100. Alternatively, the electronic device 150 may send the information about the brightness change degree or power consumption variation degree, but not the time-associated information.

In step 2923, the wireless power transmitter 100 may adjust the magnitude of transmit power 2903 to the second magnitude (A+ΔA) based on the information about the brightness change degree and change time, i.e., a first time Δt1 after receiving the information, using the information about the change time. The wireless power transmitter 100 may adjust the magnitude of transmit power 2903 to the second magnitude (A+ΔA) after the first time Δt1, e.g., in that the time difference between the first image frame and the eighth image frame is the first time Δt1. As another example, the time difference between the first image frame and the eighth image frame may be the second time Δt2. The wireless power transmitter 100 may adjust the magnitude of the transmit power 2903 to the second magnitude (A+ΔA) after the first time Δt1 which is less than the second time Δt2, given the latency of transmission and processing of communication signals. For example, when the latency already known is the third time Δt3, the wireless power transmitter may adjust the magnitude of transmit power 2903 to the second magnitude (A+ΔA) after the first time Δt1 which is the second time Δt2, which is the time difference between the first image frame and the eighth image frame, minus the third time Δt3, which is the latency.

In step 2925, the electronic device 150 may receive a fourth magnitude (B+ΔB) of power 2904 and may sequentially play second portions of the plurality of image frames at a second brightness. Although the embodiment of FIG. 29 describes when the wireless power transmitter 100 increases the magnitude of transmit power based on the results of analysis of media data, the wireless power transmitter 100 may alternatively reduce the magnitude of transmit power based on the results of analysis of media data.

FIGs. 30A and 30B illustrate a method for operating an electronic device according to an example.

The electronic device 150 may obtain a plurality of encoded image frames from the wireless power transmitter 100 or another electronic device in step 3001. Encoding is not limited to a particular scheme. In step 3003, the electronic device 150 may determine coefficients corresponding to the respective DC components of the plurality of encoded image frames before transforming the plurality of encoded image frames. The size of the coefficients corresponding to the respective DC components of the plurality of encoded image frames may be associated with the overall brightness of the image frames after decoding. Accordingly, the electronic device 150 may determine the brightness information about each image frame by determining the size of the coefficients corresponding to the DC components even before decoding the encoded image frames.

In step 3005, the electronic device 150 may determine the brightness information corresponding to each of the plurality of image frames using the determined coefficients corresponding to the DC components. In step 3007, the electronic device 150 may determine whether to change the magnitude of transmit power based on the determined brightness information. For example, the electronic device 150 may determine the brightness change degree between the image frames and determine whether to change the magnitude of transmit power using the same. The wireless power transmitter 100 may also obtain encoded image frames and determine the brightness information based on the size of the coefficients of the DC components, and may adjust the magnitude of transmit power based on the determined brightness information.

Referring to FIG. 30B, the electronic device 150 may obtain a plurality of decoded image frames in step 3011, such as by obtaining a plurality of encoded image frames and decoding the image frames. In step 3013, the electronic device 150 may calculate a mean pixel value or pixel value sum for each of the plurality of decoded image frames. The mean pixel value or pixel value sum for each image frame may be associated with brightness information, and accordingly, the electronic device 150 may determine the brightness information about each image frame based on the mean pixel value or pixel value sum. In step 3015, the electronic device 150 may determine the brightness information corresponding to each image frame based on the result of the association. In step 3017, the electronic device 150 may determine whether to change the magnitude of transmit power based on the determined brightness information.

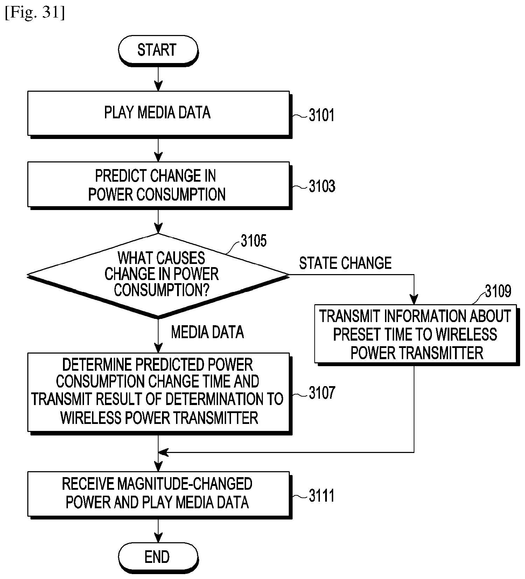

FIG. 31 illustrates a method for operating an electronic device according to an example.

The electronic device 150 may play media data in step 3101, may predict a variation in power consumption in step 3103, and may determine the cause for changing the power consumption in step 3105. When the variation in power consumption is attributed to a variation in media data, the electronic device 150 may predict the predicted time of power consumption variation and send the result of determination to the wireless power transmitter 100 in step 3107. For example, the electronic device 150 may determine that a time difference between the image frame being currently played and the image frame predicted to cause a power consumption variation exceeds a preset threshold, and may send the determined time difference. In this case, the wireless power transmitter 100 may determine the adjustment time of transmit power considering the latency required for transmission and processing of communication signals and the received time difference. Alternatively, the electronic device 150 may send, to the wireless power transmitter 100, the time information considering the latency required for transmission and processing of communication signals and the determined time difference, in which case the wireless power transmitter 100 may determine the adjustment time of transmit power based on the received time information.

When the power consumption variation is caused by a state change, such as a change in the display brightness or volume, the electronic device 150 may transmit information about a preset time to the wireless power transmitter 100 in step 3109. The preset time may be set as a time long enough to correspond to the time required for changing, e.g., the display brightness, from the minimum level to the maximum level. As compared with changing media data, brightness adjustment may be enabled despite a late response, and the adjustment time by the state change may be set to be relatively long. Table 7 below represents examples of the predicted time according to an embodiment.

**[Table 7]**

| Power information index | Predicted time (ms) | Types |
|---|---|---|
| 3 | 48 | media data |
| 7 | 48 | media data |
| 2 | 48 | media data |
| 8 | 1000 | User settings |

The power information index may correspond to the magnitude of transmit power, and may be information that is previously shared by the wireless power transmitter 100 and the electronic device 150 and written in relatively small bits to reduce the size of data indicating a particular magnitude of transmit power. For example, the wireless power transmitter 100 or the electronic device 150 may previously store the correlation information between power information index and transmit power magnitude.

The electronic device 150 may determine the power information index based on the predicted power consumption, and the wireless power transmitter 100 may determine the magnitude of transmit power based on the power information index. For example, power information index "3" may indicate that the magnitude of transmit power is 300W. Thus, the electronic device 150 may adjust the magnitude of transmit power to 300W based on the power information index "3" by reflecting the power information index "3," but rather than the full character information "300W," to the communication signal.

It will readily be appreciated by one of ordinary skill in the art that various pieces of information as set forth in Tables 1 to 6 may be replaced with indexes having a smaller data size. When the power consumption is varied by media data, the electronic device 150 may predict that the power consumption after three frames exceeds a preset threshold and may send the "48ms" information, which corresponds to a time after the three frames, to the wireless power transmitter 100 which may adjust the magnitude of power after 18ms by subtracting the time, such as 30ms, corresponding to the latency from 48ms. Upon predicting a variation in power consumption by the user settings, the electronic device 150 may transmit the information of 1000ms which is a time previously set to be long enough, to the wireless power transmitter 100. In step 3111, the electronic device 150 may receive the magnitude-changed power and play the media data.

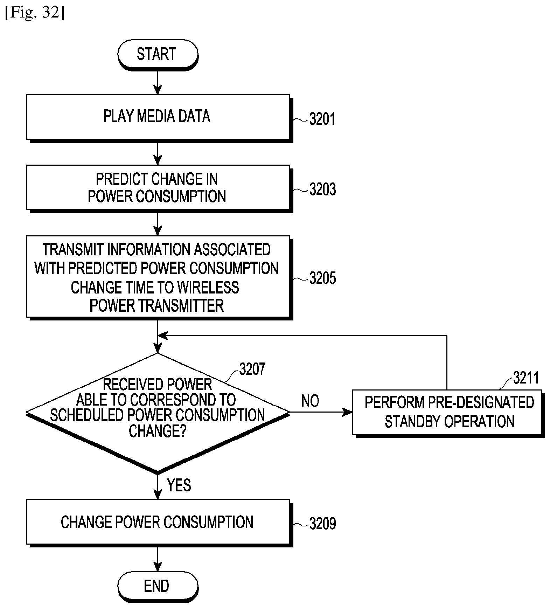

FIG. 32 illustrates a method for operating an electronic device according to an example.

The electronic device 150 may play media data in step 3201, may predict a variation in power consumption in step 3203, may transmit information associated with the predicted time of power consumption variation to the wireless power transmitter 100 in step 3205, and may determine whether to enable the received power to correspond to the power consumption scheduled to be varied in step 3207.

For example, the electronic device 150 may detect at least one of voltage, current, or power, at at least one point of the power receiving circuit and may determine whether to correspond to the scheduled power consumption based on the result of detection. Upon being able to correspond to the scheduled power consumption, the electronic device 150 may change the power consumption in step 3209. Upon determining to be unable to correspond to the scheduled power consumption, the electronic device 150 may perform a pre-designated standby operation in step 3211. For example, the electronic device 150 may stop playing the media data, and may resume playing the media data upon receipt of a sufficient magnitude of power. Alternatively, the electronic device 150 may temporarily reduce the overall brightness of the display while playing the media data, and recover the brightness of the display upon receiving a sufficient magnitude of power.

Each of the aforementioned components of the electronic device may include one or more parts, and a name of the part may vary with a type of the electronic device. The electronic device in accordance with embodiments of the present disclosure may include at least one of the aforementioned components, omit some of them, or include other additional component(s). Some of the components may be combined into an entity, but the entity may perform the same functions as the components may perform.

The term 'module' used herein may refer to a unit including one of hardware, software, and firmware, or a combination thereof, may be interchangeably used with a unit, logic, logical block, component, or circuit, may be a minimum unit or part of an integrated component or part of performing one or more functions, may be implemented mechanically or electronically, and may include at least one of application specific integrated circuit (ASIC) chips, field programmable gate arrays (FPGAs), or programmable logic arrays (PLAs) that perform some operations, which have already been known or will be developed in the future.

According to an embodiment of the present disclosure, at least a part of the device, such as modules or functions, or operations may be implemented as instructions stored in a computer-readable storage medium e.g., in the form of a program module. The instructions, when executed by a processor, may cause the processor to carry out a corresponding function. The computer-readable storage medium may be e.g., the memory 130.

As described above, provided herein is a storage medium storing one or more instructions that are executed by at least one processor to enable the at least one processor to perform at least one operation that includes performing control to wirelessly transmit a first magnitude of power for operating an electronic device through a power transmitting circuit, obtaining an operation performing command to enable the electronic device to perform a first operation, increasing a magnitude of the power from the first magnitude to a second magnitude based on the operation performing command, and after increasing the magnitude of the power, transmitting a first communication signal to enable the first operation to be performed through the communication circuit to the electronic device.

As described above, provided herein is a storage medium storing one or more instructions that are executed by at least one processor to enable the at least one processor to perform at least one operation that includes, after a magnitude of power increases from a first magnitude to a second magnitude while receiving the first magnitude of power through a power receiving circuit in a first state of the electronic device, receiving a first communication signal for requesting a change from the first state to a second state through the communication circuit and changing a state of the electronic device from the first state to the second state, corresponding to the receipt of the first communication signal.

As described above, provided herein is a storage medium storing one or more instructions that are executed by at least one processor to enable the at least one processor to perform at least one operation that includes obtaining a state change command to enable a state of the electronic device to change from a first state to a second state while receiving a first magnitude of power in the first state of the electronic device, identifying a power consumption corresponding to the second state, transmitting a first communication signal containing information about the power consumption corresponding to the second state through the communication circuit to the wireless power transmitter, and changing the state of the electronic device to the second state after a magnitude of the power received through the power receiving circuit increases from the first magnitude to a second magnitude.

The above-described commands may be stored in an external server and may be downloaded and installed on an electronic device, such as a wireless power transmitter. In other words, the external server may store one or more instructions that are downloadable by the wireless power transmitter.

The non-transitory computer-readable storage medium may include a hardware device, such as hard discs, floppy discs, and magnetic tapes, optical media such as compact disc ROMs (CD-ROMs) and digital versatile discs (DVDs), magneto-optical media such as floptical disks, ROMs, RAMs, flash memories, and/or the like. Examples of the program commands may include not only machine language codes but also high-level language codes which are executable by various computing means using an interpreter. The aforementioned hardware devices may be configured to operate as one or more software modules to perform embodiments of the present disclosure, and vice versa.

Modules or programming modules in accordance with various embodiments of the present disclosure may include at least one or more of the aforementioned components, omit some of them, or further include other additional components. Operations performed by modules, programming modules or other components in accordance with various embodiments of the present disclosure may be performed sequentially, simultaneously, repeatedly, or heuristically, and some of the operations may be performed in a different order, or omitted, or include other additional operation(s).

As is apparent from the foregoing description, there is provided a wireless power transmitter able to increase power corresponding to a particular operation before an electronic device performs the particular operation and a method for operating the same. There is provided an electronic device able to send a request for increasing power to a wireless power transmitter corresponding to a particular operation before performing the particular operation and a method for operating the same. Therefore, the power that the electronic device receives may remain greater than the power that the electronic device consumes even when the power consumption drastically increases.

While the present disclosure has been shown and described with reference to embodiments thereof, it will be understood by those skilled in the art that various changes in form and details may be made therein without departing from the scope of the present disclosure as defined by the appended claims.

## Claims

1. A wireless power transmitter (100) configured to wirelessly transmit power, the wireless power transmitter (100) comprising:
a power transmitting circuit (109);
a communication circuit (103); and
a control circuit (102) configured to:
perform control to wirelessly transmit a power having a first magnitude through the power transmitting circuit (109),
**characterized in that**
the control circuit (102) is further configured to:
obtain an operation performing command enabling an electronic device (150) to perform a first operation while transmitting the power having the first magnitude,
increase, based on the operation performing command, a magnitude of the power from the first magnitude to a second magnitude and perform control to wirelessly transmit the power having the second magnitude through the power transmitting circuit (109), and
after increasing the magnitude of the power, control the communication circuit (103) to transmit a first communication signal corresponding to the operation performing command to perform the first operation to the electronic device (150).

2. The wireless power transmitter (100) of claim 1,
wherein the control circuit (102) is further configured to:
receive a second communication signal containing the operation performing command from an external electronic device (120) through the communication circuit (103), and
obtain the operation performing command contained in the second communication signal.

3. The wireless power transmitter (100) of claim 1, further comprising another communication circuit configured to use a different communication scheme from the communication circuit (103),
wherein the control circuit (102) is further configured to:
receive a third communication signal containing the operation performing command from an external electronic device (120) through the another communication circuit, and
obtain the operation performing command contained in the third communication signal.

4. The wireless power transmitter (100) of claim 1,
wherein the control circuit (102) is further configured to:
identify a degree of adjustment of transmit power previously designated corresponding to an operation contained in the operation performing command, and
increase the magnitude of the power based on the identified degree of adjustment of the transmit power.

5. The wireless power transmitter (100) of claim 1,
wherein the control circuit (102) is further configured to:
identify a magnitude of transmit power previously designated corresponding to a predicted state of the electronic device contained in the operation performing command, and
increase the magnitude of the power based on the identified magnitude of the transmit power.

6. The wireless power transmitter (100) of claim 1,
wherein the control circuit (102) is further configured to:
identify a power consumption of the electronic device to perform an operation contained in the operation performing command, and
increase the magnitude of the power based on the identified power consumption of the electronic device (150).

7. The wireless power transmitter (100) of claim 6,
wherein the control circuit (102) is further configured to increase the magnitude of the power by a sum of an offset and the power consumption of the electronic device (150).

8. The wireless power transmitter (100) of claim 1,
wherein the control circuit (102) is further configured to:
identify a current state of the electronic device (150),
identify a predicted state of the electronic device (150) by applying an operation contained in the operation performing command to the current state,
identify a power consumption of the electronic device corresponding to the predicted state, and
increase the magnitude of the power based on the identified power consumption of the electronic device (150).

9. The wireless power transmitter (100) of claim 1,
wherein the control circuit (102) is further configured to:
increase the magnitude of the power to the second magnitude that is irrelevant to the operation performing command,
identify a third magnitude corresponding to the operation performing command after transmitting the first communication signal through the communication circuit, and
decrease the magnitude of the power from the second magnitude to the third magnitude.

10. The wireless power transmitter (100) of claim 1,
wherein the control circuit (102) is further configured to:
obtain identification information about a user of the electronic device (150), and
determine the second magnitude using the identification information about the user.

11. The wireless power transmitter (100) of claim 1,
wherein the control circuit (102) is further configured to:
obtain another operation performing command enabling the electronic device (150) to perform a second operation within a preset time after receiving the operation performing command,
determine the second magnitude based on the operation performing command and the second operation performing command,
adjust the magnitude of the power transmitted through the power transmitting circuit (109) from the first magnitude to the second magnitude, and
transmit, after adjusting the magnitude of the power, the first communication signal enabling the first operation and the second operation to be performed through the communication circuit (103) to the electronic device (150).

12. The wireless power transmitter (100) of claim 1,
wherein the control circuit (102) is further configured to:
obtain information about an ambient environment of the electronic device (150), and
determine the second magnitude using the obtained information about the ambient environment.

13. An electronic device (150) configured to wirelessly receive power from a wireless power transmitter (100), the electronic device comprising:
a power receiving circuit (159);
a communication circuit (153); and
a control circuit (152) configured to:
receive a power having a first magnitude while the electronic device (150) is in a first state of the electronic device (150),
receive the power having a second magnitude greater than the first magnitude in the first state, after receiving the power having the first magnitude,
receive, while receiving the power having the second magnitude in the first state of the electronic device (150), a first communication signal for requesting a change from the first state to a second state through the communication circuit (153), and
based on the first communication signal being received, change a state of the electronic device (150) from the first state to the second state,
wherein the control circuit (152) is further configured to delay or refrain from changing the first state to the second state, when a second communication signal for requesting to change from the first state to the second state is, through the communication circuit (153), received before receiving the power having the second magnitude and while receiving the power having the first magnitude.

14. The electronic device (150) of claim 13,
wherein the control circuit (152) is further configured to:
identify a power consumption corresponding to the second state, determine whether a magnitude of power received through the power receiving circuit (159) is greater than the power consumption, and
transmit, through the communication circuit (153) to the wireless power transmitter (100), a third communication signal containing information about the magnitude of the power received through the power receiving circuit or a request to increase the magnitude of the power transmitted from the wireless power transmitter (100).

## Patentansprüche

1. Ein drahtloser Stromsender (100), der so konfiguriert ist, um drahtlos Strom zu übertragen, wobei der drahtlose Stromsender (100) Folgendes umfasst:
eine Stromübertragungsschaltung (109);
eine Kommunikationsschaltung (103); und
eine Steuerschaltung (102), die für Folgendes konfiguriert ist:
eine Steuerung zur drahtlosen Übertragung von Strom mit einer ersten Magnitude durch die Stromübertragungsschaltung (109) durchzuführen,
**dadurch gekennzeichnet, dass**
die Steuerschaltung (102) ferner konfiguriert ist, um:
einen Operationsdurchführungsbefehl zu erhalten, der es einer elektronischen Vorrichtung (150) ermöglicht, eine erste Operation durchzuführen, während der Strom mit der ersten Magnitude übertragen wird,
auf der Grundlage des Operationsdurchführungsbefehls eine Magnitude des Stroms von der ersten Größe auf eine zweite Größe zu erhöhen und eine Steuerung durchzuführen, um die Leistung mit der zweiten Größe durch die Stromübertragungsschaltung (109) drahtlos zu übertragen, und
nach dem Erhöhen der Magnitude des Stroms die Kommunikationsschaltung (103) zu steuern, um ein erstes Kommunikationssignal, das dem Operationsdurchführungsbefehl entspricht, zur Durchführung der ersten Operation an die elektronische Vorrichtung (150) zu senden.

2. Der drahtlose Stromsender (100) nach Anspruch 1,
wobei die Steuerschaltung (102) ferner konfiguriert ist, um:
ein zweites Kommunikationssignal, das den Operationsdurchführungsbefehl enthält, von einer externen elektronischen Vorrichtung (120) über die Kommunikationsschaltung (103) zu empfangen, und
den in dem zweiten Kommunikationssignal enthaltenen Operationsdurchführungsbefehl zu erhalten.

3. Der drahtlose Stromsender (100) nach Anspruch 1, der ferner eine andere Kommunikationsschaltung umfasst, die so konfiguriert ist, dass sie ein anderes Kommunikationsschema als die Kommunikationsschaltung (103) verwendet,
wobei die Steuerschaltung (102) ferner konfiguriert ist, um:
ein drittes Kommunikationssignal, das den Befehl zur Durchführung der Operation enthält, von einer externen elektronischen Vorrichtung (120) über die andere Kommunikationsschaltung zu empfangen, und
den in dem dritten Kommunikationssignal enthaltenen Betriebsdurchführungsbefehl zu erhalten.

4. Der drahtlose Stromsender (100) nach Anspruch 1,
wobei die Steuerschaltung (102) ferner konfiguriert ist, um:
einen Grad der Anpassung des Sendestroms zu identifizieren, der zuvor entsprechend einer in dem Befehl zur Durchführung der Operation enthaltenen Operation bestimmt wurde, und
die Magnitude des Stroms basierend auf dem identifizierten Grad der Anpassung des Sendestroms zu erhöhen.

5. Der drahtlose Stromsender (100) nach Anspruch 1,
wobei die Steuerschaltung (102) ferner konfiguriert ist, um:
eine Magnitude des Sendestroms zu identifizieren, die zuvor entsprechend einem vorhergesagten Zustand der elektronischen Vorrichtung bestimmt wurde, der in dem Befehl zur Durchführung der Operation enthalten ist, und die Magnitude des Stroms basierend auf der identifizierten Magnitude des Sendestroms zu erhöhen.

6. Der drahtlose Stromsender (100) nach Anspruch 1,
wobei die Steuerschaltung (102) ferner konfiguriert ist, um:
einen Energieverbrauch des elektronischen Geräts zu identifizieren, um eine in dem Befehl zur Durchführung der Operation enthaltene Operation durchzuführen, und
die Magnitude des Stroms basierend auf dem identifizierten Stromverbrauch der elektronischen Vorrichtung (150) zu erhöhen.

7. Der drahtlose Stromsender (100) nach Anspruch 6,
wobei die Steuerschaltung (102) ferner so konfiguriert ist, dass sie die Magnitude des Stroms um eine Summe aus einem Offset und dem Stromverbrauch des elektronischen Geräts (150) erhöht.

8. Der drahtlose Stromsender (100) nach Anspruch 1,
wobei die Steuerschaltung (102) ferner konfiguriert ist, um:
einen aktuellen Zustand des elektronischen Geräts zu identifizieren (150),
einen vorhergesagten Zustand des elektronischen Geräts (150) durch Anwenden einer in dem Befehl zur Durchführung der Operation enthaltenen Operation auf den aktuellen Zustand zu identifizieren,
einen Stromverbrauch der elektronischen Vorrichtung entsprechend dem vorhergesagten Zustand zu identifizieren, und
die Magnitude des Stroms basierend auf dem identifizierten Stromverbrauch der elektronischen Vorrichtung (150) zu erhöhen.

9. Der drahtlose Stromsender (100) nach Anspruch 1,
wobei die Steuerschaltung (102) ferner konfiguriert ist, um:
die Magnitude des Stroms auf die zweite Magnitude zu erhöhen, die für den Befehl zur Durchführung der Operation irrelevant ist,
eine dritte Magnitude, die dem Befehl zur Durchführung der Operation entspricht, nachdem das erste Kommunikationssignal durch die Kommunikationsschaltung übertragen wurde, zu identifizieren und
die Magnitude des Stroms von der zweiten Magnitude auf die dritte Magnitude zu verringern.

10. Der drahtlose Stromsender (100) nach Anspruch 1,
wobei die Steuerschaltung (102) außerdem so konfiguriert ist, dass sie:
Identifizierungsinformationen über einen Benutzer des elektronischen Geräts (150) erhält, und
die zweite Magnitude unter Verwendung der Identifikationsinformationen über den Benutzer bestimmt.

11. Der drahtlose Stromsender (100) nach Anspruch 1,
wobei die Steuerschaltung (102) außerdem so konfiguriert ist, dass sie:
einen weiteren Befehl zur Durchführung einer Operation erhält, der es dem elektronischen Gerät (150) ermöglicht, innerhalb einer vorgegebenen Zeit nach dem Empfang des Befehls zur Durchführung der Operation eine zweite Operation durchzuführen,
die zweite Magnitude auf der Grundlage des Befehls zur Durchführung der Operation und des zweiten Befehls zur Durchführung der Operation bestimmt,
die Magnitude der durch die Stromübertragungsschaltung (109) übertragenen Stroms von der ersten Magnitude auf die zweite Magnitude einstellt, und
nach dem Anpassen der Strommagnitude das erste Kommunikationssignal, das die Durchführung der ersten Operation und der zweiten Operation ermöglicht, über die Kommunikationsschaltung (103) an das elektronische Gerät (150) überträgt.

12. Der drahtlose Stromsender (100) nach Anspruch 1,
wobei die Steuerschaltung (102) außerdem so konfiguriert ist, dass sie:
Informationen über die Umgebung des elektronischen Geräts (150) erhält, und
die zweite Größe unter Verwendung der erhaltenen Informationen über die Umgebung bestimmt.

13. Eine elektronische Vorrichtung (150), die so konfiguriert ist, dass sie drahtlos Energie von einem drahtlosen Energiesender (100) empfängt, wobei die elektronische Vorrichtung Folgendes umfasst:
eine Stromempfangsschaltung (159);
eine Kommunikationsschaltung (153); und
eine Steuerschaltung (152), die für Folgendes konfiguriert ist:
Strom mit einer ersten Magnitude zu empfangen, während sich die elektronische Vorrichtung (150) in einem ersten Zustand der elektronischen Vorrichtung (150) befindet,
Strom mit einer zweiten Magnitude zu empfangen, die größer ist als die erste Magnitude im ersten Zustand, nachdem er Strom mit der ersten Magnitude empfangen wurde,
während des Empfangs des Stroms mit der zweiten Magnitude im ersten Zustand der elektronischen Vorrichtung (150) ein erstes Kommunikationssignal zu empfangen, um einen Wechsel vom ersten Zustand in einen zweiten Zustand über die Kommunikationsschaltung (153) anzufordern, und
auf der Grundlage des empfangenen ersten Kommunikationssignals einen Zustand der elektronischen Vorrichtung (150) vom ersten Zustand in den zweiten Zustand zu ändern,
wobei die Steuerschaltung (152) außerdem so konfiguriert ist, dass sie die Änderung des ersten Zustands in den zweiten Zustand verzögert oder unterlässt, wenn ein zweites Kommunikationssignal zur Aufforderung, vom ersten Zustand in den zweiten Zustand zu wechseln, über die Kommunikationsschaltung (153) empfangen wird, bevor der Strom mit der zweiten Magnitude empfangen wird und während der Strom mit der ersten Magnitude empfangen wird.

14. Die elektronische Vorrichtung (150) nach Anspruch 13,
wobei die Steuerschaltung (152) außerdem so konfiguriert ist, dass sie:
einen dem zweiten Zustand entsprechenden Stromverbrauch ermittelt, feststellt, ob eine durch die Stromempfangsschaltung (159) empfangene Strommenge größer als der Stromverbrauch ist, und
über die Kommunikationsschaltung (153) ein drittes Kommunikationssignal an den drahtlosen Stromsender (100) sendet, das Informationen über die Magnitude der über die Stromempfangsschaltung empfangenen Stroms oder eine Aufforderung zur Erhöhung der vom drahtlosen Stromsender (100) übertragenen Stroms enthält.

## Revendications

1. Émetteur de puissance sans fil (100) configuré pour émettre une puissance sans fil, l'émetteur de puissance sans fil (100) comprenant :
un circuit d'émission de puissance (109) ;
un circuit de communication (103) ; et
un circuit de commande (102) configuré pour :
réaliser une commande afin d'émettre sans fil une puissance ayant une première amplitude par l'intermédiaire du circuit d'émission de puissance (109),
**caractérisé en ce que**
le circuit de commande (102) est en outre configuré pour :
obtenir une instruction de réalisation d'opération permettant à un dispositif électronique (150) de réaliser une première opération tout en émettant la puissance ayant la première amplitude,
augmenter, sur la base de l'instruction de réalisation d'opération, une amplitude de la puissance de la première amplitude à une deuxième amplitude et réaliser une commande pour émettre sans fil la puissance ayant la deuxième amplitude par l'intermédiaire du circuit d'émission de puissance (109), et
après avoir augmenté l'amplitude de la puissance, commander le circuit de communication (103) pour émettre un premier signal de communication correspondant à l'instruction de réalisation d'opération pour réaliser la première opération du dispositif électronique (150).

2. Émetteur de puissance sans fil (100) selon la revendication 1,
dans lequel le circuit de commande (102) est en outre configuré pour :
recevoir un deuxième signal de communication contenant l'instruction de réalisation d'opération d'un dispositif électronique externe (120) par l'intermédiaire du circuit de communication (103), et
obtenir l'instruction de réalisation d'opération contenue dans le deuxième signal de communication.

3. Émetteur de puissance sans fil (100) selon la revendication 1, comprenant en outre un autre circuit de communication configuré pour utiliser un schéma de communication différent du circuit de communication (103),
dans lequel le circuit de commande (102) est en outre configuré pour :
recevoir un troisième signal de communication contenant l'instruction de réalisation d'opération d'un dispositif électronique externe (120) par l'intermédiaire de l'autre circuit de communication, et
obtenir l'instruction de réalisation d'opération contenue dans le troisième signal de communication.

4. Émetteur de puissance sans fil (100) selon la revendication 1,
dans lequel le circuit de commande (102) est en outre configuré pour :
identifier un degré d'ajustement de la puissance d'émission précédemment désignée correspondant à une opération contenue dans l'instruction de réalisation d'opération, et
augmenter l'amplitude de la puissance sur la base du degré identifié d'ajustement de la puissance d'émission.

5. Émetteur de puissance sans fil (100) selon la revendication 1,
dans lequel le circuit de commande (102) est en outre configuré pour :
identifier une amplitude de puissance d'émission précédemment désignée correspondant à un état prédit du dispositif électronique contenu dans l'instruction de réalisation d'opération, et
augmenter l'amplitude de la puissance sur la base de l'amplitude identifiée de la puissance d'émission.

6. Émetteur de puissance sans fil (100) selon la revendication 1,
dans lequel le circuit de commande (102) est en outre configuré pour :
identifier une consommation de puissance du dispositif électronique pour réaliser une opération contenue dans l'instruction de réalisation d'opération, et
augmenter l'amplitude de la puissance sur la base de la consommation de puissance identifiée du dispositif électronique (150).

7. Émetteur de puissance sans fil (100) selon la revendication 6,
dans lequel le circuit de commande (102) est en outre configuré pour augmenter l'amplitude de la puissance d'une somme d'un décalage et de la consommation de puissance du dispositif électronique (150).

8. Émetteur de puissance sans fil (100) selon la revendication 1,
dans lequel le circuit de commande (102) est en outre configuré pour :
identifier un état actuel du dispositif électronique (150),
identifier un état prédit du dispositif électronique (150) en appliquant une opération contenue dans l'instruction de réalisation d'opération à l'état actuel,
identifier une consommation de puissance du dispositif électronique correspondant à l'état prédit, et
augmenter l'amplitude de la puissance sur la base de la consommation de puissance identifiée du dispositif électronique (150).

9. Émetteur de puissance sans fil (100) selon la revendication 1,
dans lequel le circuit de commande (102) est en outre configuré pour :
augmenter l'amplitude de la puissance à la deuxième amplitude qui n'est pas pertinente pour l'instruction de réalisation d'opération,
identifier une troisième amplitude correspondant à l'instruction de réalisation d'opération après l'émission du premier signal de communication par l'intermédiaire du circuit de communication, et
diminuer l'amplitude de la puissance de la deuxième amplitude à la troisième amplitude.

10. Émetteur de puissance sans fil (100) selon la revendication 1,
dans lequel le circuit de commande (102) est en outre configuré pour :
obtenir des informations d'identification concernant un utilisateur du dispositif électronique (150), et
déterminer la deuxième amplitude à l'aide des informations d'identification concernant l'utilisateur.

11. Émetteur de puissance sans fil (100) selon la revendication 1,
dans lequel le circuit de commande (102) est en outre configuré pour :
obtenir une autre instruction de réalisation d'opération permettant au dispositif électronique (150) de réaliser une seconde opération dans un temps prédéfini après avoir reçu l'instruction de réalisation d'opération,
déterminer la deuxième amplitude sur la base de l'instruction de réalisation d'opération et de la seconde instruction de réalisation d'opération,
régler l'amplitude de la puissance émise par l'intermédiaire du circuit d'émission de puissance (109) de la première amplitude à la deuxième amplitude, et
émettre, après réglage de l'amplitude de la puissance, le premier signal de communication permettant de réaliser la première opération et la seconde opération par l'intermédiaire du circuit de communication (103) vers le dispositif électronique (150).

12. Émetteur de puissance sans fil (100) selon la revendication 1,
dans lequel le circuit de commande (102) est en outre configuré pour :
obtenir des informations sur un environnement ambiant du dispositif électronique (150), et
déterminer la deuxième amplitude en utilisant les informations obtenues sur l'environnement ambiant.

13. Dispositif électronique (150) configuré pour recevoir une puissance sans fil d'un émetteur de puissance sans fil (100), le dispositif électronique comprenant :
un circuit de réception de puissance (159) ;
un circuit de communication (153) ; et
un circuit de commande (152) configuré pour :
recevoir une puissance ayant une première amplitude tandis que le dispositif électronique (150) est dans un premier état du dispositif électronique (150),
recevoir la puissance ayant une deuxième amplitude supérieure à la première amplitude dans le premier état, après avoir reçu la puissance ayant la première amplitude,
recevoir, tout en recevant la puissance ayant la deuxième amplitude dans le premier état du dispositif électronique (150), un premier signal de communication pour demander un changement du premier état à un second état par l'intermédiaire du circuit de communication (153), et
sur la base du premier signal de communication reçu, changer un état du dispositif électronique (150) du premier état au second état,
dans lequel le circuit de commande (152) est en outre configuré pour retarder ou s'abstenir de passer du premier état au second état, lorsqu'un deuxième signal de communication pour demander de passer du premier état au second état est reçu, par l'intermédiaire du circuit de communication (153), avant de recevoir la puissance ayant la deuxième amplitude et pendant la réception de la puissance ayant la première amplitude.

14. Dispositif électronique (150) selon la revendication 13,
dans lequel le circuit de commande (152) est en outre configuré pour :
identifier une consommation de puissance correspondant au second état, déterminer si une amplitude de puissance reçue par l'intermédiaire du circuit de réception de puissance (159) est supérieure à la consommation de puissance, et
émettre, par l'intermédiaire du circuit de communication (153) à l'émetteur de puissance sans fil (100), un troisième signal de communication contenant des informations sur l'amplitude de la puissance reçue par l'intermédiaire du circuit de réception de puissance ou une demande d'augmentation de l'amplitude de la puissance émise par l'émetteur de puissance (100).
